(19) Europäisches Patentamt
European Patent Office
Office européen des brevets

(11) EP 1 813 573 A1

(12) # EUROPÄISCHE PATENTANMELDUNG

(43) Veröffentlichungstag:
**01.08.2007 Patentblatt 2007/31**

(51) Int Cl.:
***C01B 33/12*** *(2006.01)* ***C09C 1/30*** *(2006.01)*
***C08K 3/36*** *(2006.01)*

(21) Anmeldenummer: **06100823.1**

(22) Anmeldetag: **25.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Degussa GmbH**
**40474 Düsseldorf (DE)**

(72) Erfinder:
- **Friehmelt, Rainer Dr.**
  **61169 Friedberg (DE)**
- **Fröhlich, Joachim Dr.**
  **53332 Bornheim (DE)**
- **Niedermeier, Werner Dr.**
  **50321 bRÜHL (DE)**
- **Hofmann, Ralph Dr.**
  **74722 Buchen (DE)**
- **Schachtely, Uwe**
  **63796 Kahl am Main (DE)**

(54) **Verfahren zur Herstellung von Gummimischungen**

(57) Gummimischungen werden hergestellt, indem man neben den anderen Bestandteilen pyrogen hergestelltes Siliciumdioxid in Form von Schülpen mit einer Stampfdichte (nach DIN EN ISO 787-11) von 185 bis 700 g/l einsetzt.

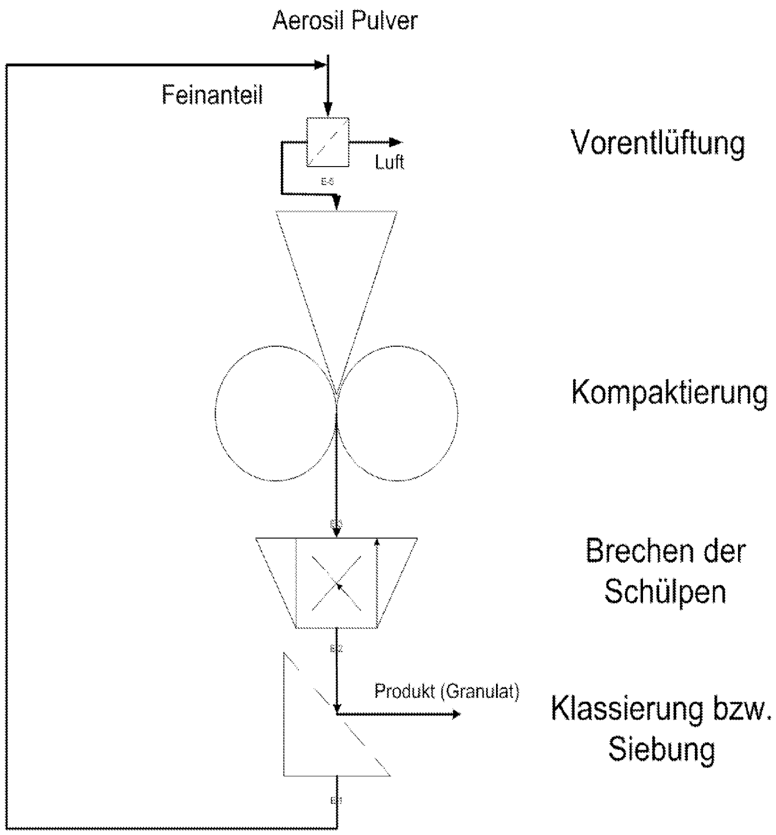


Figur 1

EP 1 813 573 A1

## Beschreibung

Die Erfindung betrifft ein Verfahren zur Herstellung von Gummimischungen.

Gummimischungen werden vielfältig verwendet. Am bekanntesten ist die Verwendung von Gummimischungen für die Herstellung von Reifen. Derartige Reifengummimischungen enthalten neben verschiedenen Gummikomponenten Verstärkerfüllstoffe wie Ruß und/oder amorphes Siliciumdioxid.

Als amorphes Siliciumdioxid wird überwiegend Fällungskieselsäure eingesetzt. Daneben wird auch pyrogen hergestelltes Siliciumdioxid eingesetzt.

So ist es aus US 6,455,613 B1 bekannt, pyrogen hergestelltes Siliciumdioxid in Reifengummimischungen einzusetzen. Dieses pyrogen hergestellte Siliciumdioxid weist eine Schüttdichte von 40 bis 60 g/l (pour density ASTMD 1513) auf.

Es ist bekannt, pyrogen hergestelltes Siliciumdioxid gemeinsam mit einem Silankupplungagens in den Gummimischungen einzusetzen (US 5,430,087 und US 5,294,253).

Die bekannten Verfahren weisen den Nachteil auf, daß das pyrogen hergestellte Siliciumdioxid in Pulverform eingesetzt wird, und daher eine Staubbelastung berücksichtigt werden muß. Aufgrund der geringen Schüttdichte muss darüber hinaus das pulverförmige, pyrogen hergestellte Siliciumdioxid in mehreren Schritten zugegeben werden, was zu einer Erhöhung der Mischzeit führt. Bekannten Verfahren, bei denen die Schüttdichte erhöht und die Staubbelastung reduziert wird, können zu einer Beeinträchtigung der Dispergierbarkeit führen. Bei anderen Verfahren mit Erhöhung der Schüttdichte kann nicht gleichzeitig die Staubbelastung vermieden werden.

Die Aufgabe der Erfindung ist es, ein Verfahren zur Herstellung von Gummimischungen zu entwickeln, bei denen diese Nachteile nicht auftreten.

Gegenstand der Erfindung ist ein Verfahren zur Herstellung von Gummimischungen, bei welchem pyrogen hergestelltes Silicumdioxid neben anderen Bestandteilen zugemischt wird, welches dadurch gekennzeichnet ist, daß das pyrogen hergestellte Siliciumdioxid in Form von Schülpen mit einer Stampfdichte (nach DIN EN ISO 787-11) von 185 bis 700 g/l eingesetzt wird.

In einer bevorzugten Ausführungsform der Erfindung kann die Stampfdichte (nach DIN EN ISO 787-11) der Schülpen 200 bis 450 g/l betragen.

Als Schülpen bezeichnet man die mehr oder weniger bandförmigen Zwischenprodukte, die bei der Walzenkompaktierung durch die Verpressung des Ausgangsmaterials entstehen. Sie werden in einem zweiten Schritt zerkleinert.

Die Schülpeneigenschaften können durch die prozeduralen Größe, wie der gewährte Prozeßsteuerungsmodus, die Kompaktierkraft, die Breite des Spalts zwischen den beiden Walzen und die Druckhaltezeit, die durch die entsprechende Veränderung der Umdrehungsgeschwindigkeiten der Preßwalzen eingestellt wird, beeinflußt werden.

Unter Kompaktieren wird die mechanische Verdichtung ohne Zusatz von Bindemittel verstanden. In einer besonderen Ausführungsform der Erfindung weisen die Schülpen eine umrissene Gestalt auf, wobei die Größenverteilung mittels Siebung eingestellt werden kann.

Das erfindungsgemäß eingesetzte, zu Schülpen kompaktierte, pyrogen hergestellte Siliciumdioxid weist eine hohe Transportstabilität auf.

Die Herstellung der erfindungsgemäß eingesetzten Schülpen aus pyrogen hergestelltem Siliciumdioxid mit einer Stampfdichte (nach DIN EN ISO 787-11) von 185 bis 700 g/l erfolgt, indem man pyrogen hergestelltes Siliciumdioxid vorentlüftet, beziehungsweise vorverdichtet, zu Schülpen kompaktiert, die Schülpen bricht und gegebenenfalls klassiert.

Eine schematische Darstellung des Verfahrens ist in der Figur 1 dargestellt.

Gemäß Figur 1 wird das pyrogen hergestellte Siliciumdioxid in dem Schritt "Vorentlüftung" mittels bekannter Methoden und Vorrichtungen entlüftet oder vorverdichtet. Dieser Schritt ist notwendig, wenn ein unverdichtetes pyrogen hergestelltes, gegebenenfalls frisch hergestelltes Siliciumdioxid eingesetzt wird.

Wird ein bereits vorverdichtetes pyrogen hergestelltes Siliciumdioxid eingesetzt, kann auf diesen Schritt der Vorentlüftung verzichtet werden.

Das vorentlüftete pyrogen hergestellte Siliciumdioxid wird in dem Schritt der "Kompaktierung" auf die gewünschte Stampfdichte verdichtet (kompaktiert).

Nach dem Kompaktieren werden die Schülpen gebrochen, gegebenenfalls anschließend klassiert beziehungsweise gesiebt.

Der Feinanteil, der bei der Siebung anfällt, kann in den Schritt der Vorentlüftung zurückgeführt werden.

Als Edukt kann bei der Vorentlüftung ein unverdichtetes oder ein vorverdichtetes Siliciumdioxid eingesetzt werden.

Die Vorentlüftung kann vor dem Transport oder während des Transports zur Kompaktierung durchgeführt werden.

Vor dem Transport zur Kompaktierung kann die Vorentlüftung mittels eines mit Vakuum beaufschlagten Rohres aus einem Sintermaterial, wie zum Beispiel Sintermetall, erfolgen.

Die Vorentlüftung kann weiterhin in der Transportschnecke erfolgen, wobei die Transportschnecke der Vorrichtung, die ein mit Vakuum beaufschlagtes Rohr umfaßt, nachgeschaltet sein kann.

Es kann in einer weiteren Ausführungsform der Erfindung die Transportschnecke als die alleinige Vorrichtung zur Vorentlüftung eingesetzt werden.

Weiterhin kann die Vorentlüftung mittels einer Transportschnecke erfolgen, die innerhalb eines Rohres, das mit Vakuum beaufschlagt ist, angeordnet ist. Das mit Vakuum beaufschlagte Rohr kann aus einem Sintermaterial, wie zum Beispiel Sintermetall, bestehen.

Wenn die Vorrichtung aus einem Vorentlüftungsrohr beispielsweise eines mit Vakuum beaufschlagten Rohres und einer nachgeschalteten Transportschnecke besteht, kann die Vorentlüftung in dem Rohr erfolgen, wenn ein unverdichtetes Siliciumdioxid eingesetzt wird.

Wird ein vorverdichtetes Siliciumdioxid eingesetzt, kann die Vorentlüftung ebenfalls in dem Rohr erfolgen. Es kann auch auf diesen Vorentlüftungsschritt verzichtet werden.

Wird zur Vorentlüftung ausschließlich die Transportschnecke eingesetzt, muß vorverdichtetes Siliciumdioxid eingesetzt werden.

Wird zur Vorentlüftung die Vorrichtung eingesetzt, die eine Transportschnecke innerhalb eines mit Vakuum beaufschlagten Rohres aufweist, kann sowohl das unverdichtete Siliciumdixid als auch das vorverdichtete Siliciumdioxid eingesetzt werden.

Die Vorentlüftung des pyrogen hergestellten Siliciumdioxides kann weiterhin mittels Filtration an einem Filtermedium, wie zum Beispiel einem Tuch oder Sinterwerkstoff, wie zum Beispiel Sintermetall, Sinterkunststoff, Sinterkeramik, porösem Glas, mit kontinuierlichem Filterkuchenabtrag durch beispielsweise eine Förderschnecke oder einen Schaber erfolgen. In einer Ausführungsform kann man ein Sintermetallrohr mit einer Dosierschnecke verwenden.

Die Vorentlüftung kann weiterhin mittels Sedimentation erfolgen, wobei das Aufbrechen von Feststoffbrücken durch überlagerte Vibration, Schall oder langsames Rühren unterstützt wird.

Als Edukt kann ein hydrophiles, pyrogen hergestelltes Siliciumdioxid oder ein hydrophobes, pyrogen hergestelltes Siliciumdioxid eingesetzt werden.

Das hydrophobe pyrogen hergestellte Siliciumdioxid kann mittels Oberflächenmodifizierung hergestellt werden.

Die Oberflächenmodifizierung kann mit einer oder mehreren Verbindungen aus der folgenden Gruppe erfolgen:

a) Organosilane des Types $(RO)_3Si\ (C_nH_{2n+1})$ und
$(RO)_3Si(C_nH_{2n-1})$

R = Alkyl, wie zum Beispiel Methyl-, Ethyl-, n-Propyl-, i-Propyl-, Butyl-
n = 1 - 20

b) Organosilane des Types $R'_x(RO)_ySi(C_nH_{2n+1})$ und
$R'_x(RO)_ySi(C_nH_{2n-1})$

R = Alkyl, wie zum Beispiel Methyl-, Ethyl-, n-Propyl-, i-Propyl-, Butyl-
R' = Alkyl, wie zum Beispiel Methyl-, Ethyl-, n-Propyl-, i-Propyl-, Butyl-
R'= Cycloalkyl
n = 1 - 20
x+y = 3
x = 1,2
y = 1,2

c) Halogenorganosilane des Types $X_3Si(C_nH_{2n+1})$ und
$X_3Si\ (C_nH_{2n-1})$

X = Cl, Br
n = 1 - 20

d) Halogenorganosilane des Types $X_2(R')Si(C_nH_{2n+1})$ und
$X_2(R')\ Si\ (C_nH_{2n-1})$

X = Cl, Br
R' = Alkyl, wie zum Beispiel Methyl-, Ethyl-, n-Propyl-, i-Propyl-, Butyl-
R'= Cycloalkyl
n = 1 - 20

e) Halogenorganosilane des Types $X(R')_2Si(C_nH_{2n+l})$ und X(R')2Si(CnH2n-l)

X = Cl, Br
R' = Alkyl, wie zum Beispiel Methyl-, Ethyl-,
R'= Cycloalkyl n-Propyl-, i-Propyl-, Butyl-
n = 1 - 20

f) Organosilane des Types $(RO)gSi(CH_2)_m$-R'

R = Alkyl, wie Methyl-, Ethyl-, Propyl-
m = 0,1 - 20
R' = Methyl-, Aryl (zum Beispiel $-C_6H_5$, substituierte Phenylreste)
$-C_4F_9$, $OCF_2-CHF-CF_3$, $-C_6F_{13}$, $-O-CF_2-CHF_2$
$-NH_2$, $-N_3$, -SCN, $-CH=CH_2$, $-NH-CH_2-CH_2-NH_2$,
$-N-(CH_2-CH_2-NH_2)_2$
$-OOC(CH_3)C = CH_2$
$-OCH_2-CH(O)CH_2$
$-NH-CO-N-CO-(CH_2)_5$
$-NH-COO-CH_3$, $-NH-COO-CH_2-CH_3$, $-NH-(CH_2)_3Si(OR)_3$
$-S_x-(CH_2)_3Si(OR)_3$, wobei X = 1 bis 10 und R = Alkyl, wie Methyl-, Ehtyl-, Propyl-, Butyl- sein kann
-SH
-NR'R"R"' (R' = Alkyl, Aryl; R" = H,

Alkyl, Aryl; R'" = H, Alkyl, Aryl, Benzyl, $C_2H_4$NR"'' R"'' mit R"" = A, Alkyl und R""'= H, Alkyl)

g) Organosilane des Typs $(R'')_x(RO)_ySi\ (CH_2)_m$-R'

R" = Alkyl x+y = 2
= Cycloalkyl x = 1,2
y = 1,2
m = 0,1 bis 20
R' = Methyl-, Aryl (zum Beispiel $-C_6H_5$ ,substituierte Phenylreste)
$-C_4F_9$, $-OCF_2-CHF-CF_3$, $-C_6F_{13}$, $-O-CF_2-CHF_2$
$-NH_2$, $-N_3$, -SCN, $-CH=CH_2$, $-NH-CH_2-CH_2-NH_2$,
$-N-\ (CH_2-CH_2-NH_2)\ _2$
$-OOC(CH_3)C = CH_2$
$-OCH_2-CH(O)CH_2$
$-NH-CO-N-CO-(CH_2)_5$
$-NH-COO-CH_3$, $-NH-COO-CH_2-CH_3$, $-NH-(CH_2)gSi(OR)_3$
$-S_x-(CH_2)_3Si(OR)_3$, wobei X = 1 bis 10 und
R = Methyl-, Ethyl-, Propyl-, Butyl- sein kann
-SH - NR'R"R"' (R' = Alkyl, Aryl; R" = H, Alkyl, Aryl; R"' = H, Alkyl, Aryl, Benzyl, $C_2H_4$NR"'' R""' mit R"" = A, Alkyl und R""'
= H, Alkyl)

h) Halogenorganosilane des Types $X_3Si(CH_2)_m$-R'

X = Cl, Br
m = 0, 1 - 20
R' = Methyl-, Aryl (zum Beispiel $-C_6H_5$, substituierte Pheneylreste)
$-C_4F_9$, $-OCF_2-CHF-CF_3$, $-C_6F_{13}$, $-O-CF_2-CHF_2$
$-NH_2$, $-N_3$, -SCN, $-CH=CH_2$,
$-NH-CH_2-CH_2-NH_2$
$-N-\ (CH_2-CH_2-NH_2)_2$
$-OOC(CH_3)C = CH_2$
$-OCH_2-CH(O)CH_2$
$-NH-CO-N-CO-(CH_2)_5$

$-NH-COO-CH_3$, $-NH-COO-CH_2-CH_3$, $-NH-(CH_2)_3Si(OR)_3$
$-S_x-(CH_2)_3Si(OR)_3$, wobei X = 1 bis 10 und R = Methyl-, Ethyl-, Propyl-, Butyl- sein kann
-SH

i) Halogenorganosilane des Types $(R)X_2Si(CH_2)_m-R'$

X = Cl, Br
R = Alkyl, wie Methyl,- Ethyl-, Propyl-
m = 0,1 - 20
R' = Methyl-, Aryl (z.B. $-C_6H_5$, substituierte Phenylreste)
$-C_4F_9$, $-OCF_2-CHF-CF_3$, $-C_6F_{13}$, $-O-CF_2-CHF_2$

$-NH_2$, $-N_3$, -SCN, $-CH=CH_2$, $-NH-CH_2-CH_2-NH_2$,
$-N-(CH_2-CH_2-NH_2)_2$
$-OOC(CH_3)C = CH_2$
$-OCH_2-CH(O)CH_2$
$-NH-CO-N-CO-(CH_2)_5$
$-NH-COO-CH_3$, $-NH-COO-CH_2-CH_3$, $-NH-(CH_2)_3Si(OR)_3$, wobei R = Methyl-, Ethyl-, Propyl-, Butyl- sein kann
$-S_x-(CH_2)_3Si(OR)_3$, wobei R = Methyl-, Ethyl-, Propyl-, Butyl- und X = 1 bis 10 sein kann
-SH

j) Halogenorganosilane des Types $(R)_2X\,Si(CH_2)_m-R'$

X = Cl, Br
R = Alkyl, wie Methyl-, Ethyl-, Propyl-, Butyl-
m = 0,1 - 20
R' = Methyl-, Aryl (z.B. $-C_6H_5$, substituierte Phenylreste)
$-C_4F_9$, $-OCF_2-CHF-CF_3$, $-C_6F_{13}$, $-O-CF_2-CHF_2$
$-NH_2$, $-N_3$, -SCN, $-CH=CH_2$, $-NH-CH_2-CH_2-NH_2$,
$-N-(CH_2-CH_2-NH_2)_2$
$-OOC(CH_3)C = CH_2$
$-OCH_2-CH(O)CH_2$
$-NH-CO-N-CO-(CH_2)_5$
$-NH-COO-CH_3$, $-NH-COO-CH_2-CH_3$, $-NH-(CH_2)_3Si(OR)_3$
$-S_x-(CH_2)_3Si(OR)_3$, wobei X = 1 bis 10 und R = Methyl-, Ethyl-, Propyl-, Butyl- sein kann
-SH

k) Silazane des Types

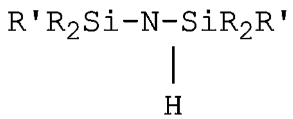

R = Alkyl
R' = Alkyl, Vinyl

l) Cyclische Polysiloxane des Types D 3, D 4, D 5, wobei unter D 3, D 4 und D 5 cyclische Polysiloxane mit 3,4 oder 5 Einheiten des Typs $-O-Si(CH_3)_2-$ verstanden wird. Z.B. Octamethylcyclotetrasiloxan = D 4

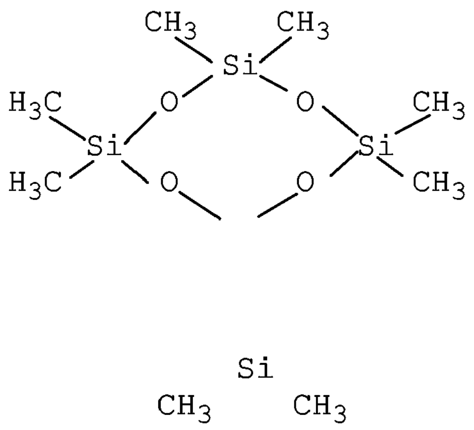

m) Polysiloxane beziehungsweise Silikonöle des Types

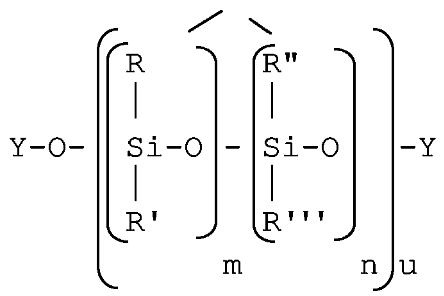

m = 0,1,2,3,...∞
n = 0,1,2,3,...∞
u = 0,1,2,3,...∞

$Y=CH_3$, H, $C_nH_{2n+1}$ n=1-20
$Y=Si\ (CH_3)_3$, $Si(CH_3)_2H$
$Si(CH_3)_2OH$, $Si(CH_3)_2(OCH_3)$
$Si\ (CH_3)_2\ (C_nH_{2n+1})$ n=1-20

R = Alkyl, wie $C_nH_{2n+1}$, wobei n = 1 bis 20 ist, Aryl, wie Phenyl- und substituierte Phenylreste, $(CH_2)_n-NH_2$, H
R' = Alkyl, wie $C_nH_{2n+1}$, wobei n = 1 bis 20 ist, Aryl, wie Phenyl- und substituierte Phenylreste, $(CH_2)_n-NH_2$, H
R" = Alkyl, wie $C_nH_{2n+1}$, wobei n = 1 bis 20 ist, Aryl, wie Phenyl- und substituierte Phenylreste, $(CH_2)_n-NH_2$, H
R"' = Alkyl, wie $C_nH_{2n+l}$, wobei n = 1 bis 20 ist, Aryl, wie Phenyl- und substituierte Phenylreste, $(CH_2)_n-NH_2$, H

In einer Ausführungsform kann man als Edukt ein vorverdichtetes pyrogen hergestelltes Siliciumdioxid einsetzen.

Das eingesetzte unverdichtete pyrogen hergestellte Siliciumdioxid kann eine Stampfdichte (nach DIN EN ISO 787-11) von kleiner 50 g/l, vorzugsweise von 20 bis 30 g/l aufweisen. Das eingesetzte vorverdichtete pyrogen hergestellte Siliciumdioxid kann eine Stampfdichte (nach DIN EN ISO 787-11) von 50 bis 190 g/l, vorzugsweise 100 bis 150 g/l, aufweisen, wobei bei einem vorverdichteten hydrophoben pyrogen hergestellten Siliciumdioxid die Stampfdichte (nach DIN EN ISO 787-11) 90 bis 120 g/l betragen kann.

Das eingesetzte hydrophile Siliciumdioxid kann im unverdichteten Zustand eine Stampfdichte (nach DIN EN ISO 787-11) von kleiner 50 g/l, vorzugsweise 20 bis 30 g/l aufweisen.

Im vorverdichteten Zustand kann das hydrophile Siliciumdioxid eine Stampfdichte (nach DIN EN ISO 787-11) von 50 bis 190 g/l, vorzugsweise von 100 bis 150 g/l, aufweisen.

Im vorverdichteten Zustand kann das hydrophobe Siliciumdioxid eine Stampfdichte (nach DIN EN ISO 787-11) von 50 bis 190 g/l, vorzugsweise von 90 bis 120 g/l, aufweisen.

Das eingesetzte pyrogen hergestellte Siliciumdioxid kann eine Primärteilchengröße von 5 bis 50 nm und eine BET-Oberfläche von 40 bis 400 $m^2/g$, vorzugsweise 100 bis 250 $m^2/g$, aufweisen.

Der Wassergehalt des eingesetzten pyrogen hergestellten Siliciumdioxids kann kleiner 1 Gew.-% betragen.

Das pyrogen hergestellte Siliciumdioxid kann mittels bekannter Verfahren und Vorrichtungen vorverdichtet sein. So können beispielsweise die Vorrichtungen gemäß US 4,325,686, US 4,877,595, US 3,838,785, US 3,742,566, US 3,762,851, US 3,860,682 verwendet werden.

Weiterhin kann man ein pyrogen hergestelltes Siliciumdioxid einsetzen, das mittels eines Pressbandfilters gemäß EP 0280851 B1 oder US 4,877,595 vorverdichtet wurde.

Der Transport des pyrogen hergestellten Siliciumdioxids zur Kompaktierung kann beispielsweise mittels einer Schnecke erfolgen.

Dieser Transport ist eine Zwangsführung des pyrogen hergestellten Siliciumdioxides in den Walzenspalt der Kompaktierwalzen. Falls keine Förderschnecke eingesetzt wird, muß ein vorverdichtetes pyrogen hergestelltes Siliciumdioxid eingesetzt werden.

Wird eine Förderschnecke verwendet, kann das pyrogen hergestellte Siliciumdioxid nicht vorverdichtet sein, weil hier eine Vorentlüftung stattfindet.

Zum Erreichen von hohen Schüttgewichten der Schülpen kann eine Förderschnecke und ein vorverdichtetes pyrogen hergestelltes Siliciumdioxid eingesetzt werden.

Als Förderschnecke kann eine Schnecke mit abnehmendem Volumen oder mit zunehmender Steigung oder mit abnehmendem Durchmesser eingesetzt werden.

Die Förderschnecke kann von einem mit Vakuum beaufschlagten Rohr umgeben sein. Dieses Rohr kann aus einem Sintermantel bestehen. Die Vorentlüftung des Siliciumdioxides erfolgt hier in der Transportschnecke gleichzeitig mit dem Transport in den Walzenspalt.

Die Kompaktierung zu Schülpen kann mittels zweier Walzen erfolgen, von denen eine oder auch beide gleichzeitig eine Entlüftungsfunktion haben können.

Es können vorzugsweise zwei Kompaktwalzen eingesetzt werden, die glatt sein können. Sie können auch profiliert sein. Das Profil kann sowohl nur auf einer Kompaktwalze als auch auf beiden Kompaktwalzen vorhanden bestehen.

Das Profil kann aus achsenparallelen Riffeln bestehen. Es kann alternativ aus beliebig angeordneten Mulden (Vertiefungen) in beliebiger Ausgestaltung sein.

In einer weiteren Ausführungsform der Erfindung kann mindestens eine der Walzen eine Vakuumwalze sein. In dieser Ausführungsform kann die Walze mit Sintermetall bespannt sein.

Um die Entlüftungsfunktion bewerkstelligen zu können, kann die Walze aus Sintermetall hergestellt sein oder mit einem Filtermedium, wie zum Beispiel mit einem Tuch, bespannt sein.

Falls eine Entlüftung des pyrogen hergestellten Siliciumdioxides mittels der Walzen möglich ist, kann auf die zusätzliche Vorentlüftung, die in der Förderschnecke oder dem Zuleitungsrohr erfolgen kann, verzichtet werden.

Wird die Walze zur Vorentlüftung verwendet, kann die Walze eine glatte oder profilierte Oberfläche aufweisen, wobei diese Oberfläche nur leicht geriffelt sein kann, um den Produkteinzug zu verbessern.

Bei der Kompaktierung sollte eine gleichmäßige Pressung des pyrogen hergestellten Siliciumdioxides gewährleistet sein, um Schülpen mit einer gleichmäßigen Dichte zu erhalten.

Für die Durchführung der Kompaktierung kann eine Vorrichtung, wie sie in der Figur 2 dargestellt ist, eingesetzt werden.

Gemäß Figur 2 wird das pyrogen hergestellte Siliciumdioxid mittels der Vorverdichterschnecke 1 in die Kammer 2 zwischen den beiden Walzen 3 eingeführt und zwischen den beiden Walzen zu Schülpen verpresst.

Zur Durchführung des Verfahrens kann weiterhin eine Vorrichtung eingesetzt werden, wie sie in dem Dokument DE AS 1807714 beschrieben wird.

Bei der Kompaktierung können, um Grit zu vermeiden, bevorzugt glatte Walzen eingesetzt werden. Es können weiterhin eine oder zwei Walzen aus Sinterwerkstoff, wie Sintermetall oder Sinterkeramik, eingesetzt werden, über die eine Entlüftung erfolgen kann.

Nach der Kompaktierung werden die Schülpen gebrochen. Hierzu kann ein Siebgranulator, der mit seiner Maschenweite des Siebes die Korngröße vorgibt, verwendet werden. Die Maschenweite kann 250 $\mu$m bis 20 mm betragen.

Für das Brechen der Schülpen kann weiterhin eine Vorrichtung mit zwei, sich gegensinnig drehenden Walzen mit einem definierten Spalt oder eine Stachelwalze eingesetzt werden.

Die gebrochenen Schülpen können mittels eines Sichters, eines Siebes oder eines Klassierers klassiert werden. Dabei kann der Feinanteil (Teilchen kleiner 200 $\mu$m) abgetrennt werden.

Als Sichter können Querstromsichter, Gegenstromumlenksichter etc. eingesetzt werden.

Als Klassierer kann ein Zyklon eingesetzt werden.

Der bei der Klassierung abgetrennte Feinanteil (Teilchen kleiner 200 $\mu$m) kann in das Verfahren zurückgeführt

werden.

**Bestimmung des Staubgehaltes**

Die Bestimmung des Staubgehaltes erfolgt gemäß DIN 55992-2.

Vor der Messung wird eine abgewogene Menge der Schülpen des zu untersuchenden pyrogen hergestellten Siliciumdioxides in ein Beschickungssystem am oberen Ende des Fallrohres eingefüllt. Dieses ist vor dem Start der Messung nach unten durch Klappen verschlossen. Das Ende des Fallrohrs ist verschlossen. Mit dem Start der Messung wird diese Klappe für ein bestimmtes Zeitintervall geöffnet, sodaß die Probe in das Fallrohr fallen kann. Während des Fallens und beim Auftreffen auf den Boden des Fallrohrs gibt die Probe Staub an die Luft ab. Die Luftwirbel während des Fallens sorgen für eine gleichmäßige Verteilung des Staubes in dem Rohr. Anschließend beginnt die Sedimentation der Schwebstoffe. Am unteren Ende des Fallrohres wird die Lichtextinktion, die durch den Schwebstoff hervorgerufen wird, durch einen photometrischen Sensor gemessen. Der Sedimentationsverlauf wird als Funktion der Zeitdauer von einem PC aufgezeichnet. Beim Staubmessgeräte CIPACMT171 wird direkt die Extinktion E (in %) als Funktion der Sedimentationsdauer aufgetragen. Beim Staubmessgerät SP3 der Fa. Lorenz wird nach folgender Formel (Gl. 1) die Staubzahl SZ berechnet und als Funktion der Zeit aufgetragen.

$$SZ = 1 - \frac{\int_{1s}^{30s} E(t)dt - \int_{16s}^{30s} E(t)dt}{\int_{1s}^{30s} E(t)dt}$$

Die Staubzahl ist ein Maß für den Feinstaubgehalt der Probe. Dabei ist hier die Fraktion als "Feinstaub" bezeichnet, deren Sedimentationsgeschwindigkeit in Luft kleiner als 1m/16s = 0,0625 m/s ist.

Eine schematische Darstellung der verwendeten Vorrichtung zur Bestimmung des Staubgehaltes ist in der Figur 3 dargestellt.

In der Figur 4 werden der Feinstaubgehalt zu Schülpen kompaktierten, pyrogen hergestellten Siliciumdioxids und die Feinstaubanteile von pyrogenem Siliciumdioxid, das auf bekanntem Wege verdichtet wurde, gegenübergestellt.

Als Ausgangsmaterial für das Verfahren zur Herstellung der Schülpen wurde ein pyrogen hergestelltes Siliciumdioxid eingesetzt, das mittels des Preßbandfilters gemäß EP 0280851 B1 verdichtet wurde.

Figur 4 zeigt ein Maß für die Partikelgrößenverteilung und die mittlere Partikelgröße der Pulver- beziehungsweise Schülpenschüttung. Hier zeigt sich, daß die erfindungsgemäß eingesetzten Schülpen des pyrogen hergestellten Siliciumdioxides bedeutend besser sedimentieren und bedeutend weniger Staub entwickeln als die Granulate gemäß EP 0 725037 A1.

Figur 4 zeigt weiterhin ein Maß für den Feinbeziehungsweise Schwebstaubgehalt. Hier zeigt sich, daß bei den erfindungsgemäß eingesetzten Schülpen der Schwebstaubgehalt drastisch reduziert werden kann. Bei Granulaten gemäß EP 075 037 A1 bleibt ein großer Anteil sehr lange in Schwebe.

Figur 5 zeigt die Summenverteilung (Q-3-Verteilung) von verschiedenen Granulaten gemäß EP 0 725 037 A1. Keines dieser Granulate zeigt eine mittlere Teilchengröße von 120 um. Lediglich die größten Partikel in diesem Kollektiv sind zwischen 96 und 128 um groß. Dies sind weniger als 11 ‰

Die erfindungsgemäß eingesetzten Schülpen mit X <250 um haben in der Laserbeugungsspektroskopie dieselbe mittlere Partikelgröße wie das Granulat gemäß EP 0 725 037 A1. In beiden Fällen ist es ~ 35 μm.

Die erfindungsgemäß eingesetzten Schülpen erzeugen jedoch bedeutend weniger Staub.

Die Fraktionen der Schülpen wurden durch Siebgranulierung mit einem Sieb der Maschenweite 500 μm und einer anschließenden Siebung auf einem 250 μm Sieb hergestellt. Die Fraktion x <250 μm war das Feingut bei der Siebung. Die Fraktion mit einer Partikelgröße zwischen 250 und 500 μm war das Grobgut.

Figur 6 zeigt das erfindungsgemäß eingesetzte zu Schülpen kompaktierte, pyrogen hergestellte Siliciumdioxid in seiner Granulatform nach der Brechung und Siebung. Es weist eine kantige Form auf.

Die Granulate gemäß DE 19601415 weisen ein kugelförmiges Erscheinungsbild auf.

In einer bevorzugten Ausführungsform der Erfindung weisen die erhaltenen Schülpen eine Stampfdichte (nach DIN EN ISO 787-11) zwischen 200 und 400 g/l auf. Diese Schülpen weisen dann die notwendige Festigkeit auf, um nicht in den nachfolgenden Schritten wieder zu zerfallen. Sie lassen sich aber wieder gut dispergieren.

Weiterhin weisen die erhaltenen Schülpen eine Porosität auf.

Die erfindungsgemäß eingesetzten Schülpen weisen nach dem Brechen auch ohne Siebung beziehungsweise Klassierung eine vorteilhafte Staubarmut auf.

Die erfindungsgemäß eingesetzten Schülpen weisen eine Agglomerathärte von kleiner 50N, gemessen mit ERWEKA 30, auf.

Die erfindungsgemäß eingesetzten Schülpen weisen nach dem Brechen keinen weiteren Staubanteil auf. Auch bei dem Handling, dem Transport oder der Lagerung entsteht bei den erfindungsgemäß erhaltenen Schülpen kein weiterer Staubanteil. Das zu Schülpen kompaktierte, pyrogen hergestellte Siliciumdioxid weist nach dem Sieben keinen Feinanteil mit einem Durchmesser von kleiner 200 $\mu$m auf.

Das erfindungsgemäß eingesetzte zu Schülpen kompaktierte pyrogen hergestellte Siliciumdioxid weist eine für alle Anwendungen vorteilhafte Staubarmut auf. Es kann ohne Verlust und ohne Staubbelästigung in Mischungen eingearbeitet werden.

Obwohl das pyrogen hergestellte Siliciumdioxid kompaktiert wurde, weisen die erfindungsgemäßen Schülpen eine ausreichende Redispergierbarkeit auf.

Das erfindungsgemäß zu Schülpen kompaktierte, pyrogen hergestellte Siliciumdioxid weist kein Bindemittel auf.

Für die Verwendung von Kieselsäuren als verstärkenden Füllstoff in Kautschukmischungen, wie sie unter anderem zur Herstellung von luftgefüllten Reifen und technischen Gummiartikeln Verwendung finden, werden hohe Anforderungen gestellt. Sie sollen leicht und gut im Kautschuk einarbeitbar und dispergierbar sein und in Verbindung mit einem Kopplungsreagenz, vorzugsweise einer bifunktionellen Organosiliziumverbindung, eine chemische Verbindung mit dem Kautschuk eingehen, die zu der angestrebten hohen Verstärkung der Gummimischung führt. Die Verstärkungseigenschaft kann insbesondere an hohen statischen Spannungswerten und einem niedrigen Abriebswert festgemacht werden. Für die Verstärkungseigenschaft der Kieselsäuren ist insbesondere die Teilchengröße, deren Oberfläche und Morphologie, Oberflächenaktivität sowie das Anbindungsvermögen des Kopplungsreagenzes von entscheidender Bedeutung.

Zudem ist dem Fachmann bekannt, dass niedermolekulare Verbindungen, wie zum Beispiel die bifunktionellen Organosiliziumverbindungen und Vulkanisationsbeschleuniger, in den Poren der mikroporösen Kieselsäure physi- und chemisorbieren können und damit ihre Funktion als Kautschukhaftvermittler beziehungsweise Vulkanisationsbeschleuniger zur Kautschukvernetzung nur noch eingeschränkt ausüben können.

Ferner ist dem Fachmann bekannt, dass das Kopplungsreagenz, üblicherweise eine bifunktionelle Organosiliziumverbindung bekannt aus zum Beispiel S. Wolff, "Chemical Aspects of Rubber Reinforcement by Fillers", Rubber Chem. Technol. 69, 325 (1996), die kautschukwirksame Oberfläche möglichst homogen und quantitativ modifizieren soll. Die Modifizierung kann durch eine Vorbelegung der Kieselsäure in Substanz oder in Lösung/Suspension (ex-situ) ( U. Görl, R. Panenka, "Silanisierte Kieselsäuren - Eine neue Produktklasse für zeitgemäße Mischungsentwicklung", Kautsch. Gummi Kunstst. 46, 538 (1993)) sowie während des Mischprozesses (in-situ) (H.-D. Luginsland, "Processing of Silica/Silane-Filled Tread Compounds", paper No. 34 presented at the ACS Meeting, April 4-6, 2000, Dallas, Texas/USA) erfolgen, wobei die in-situ Modifizierung das zu bevorzugende und auch üblicherweise angewandte Verfahren darstellt.

Optional kann die erfindungsgemäß eingesetzte Kieselsäure mit linearen, cyclischen und/oder verzweigten Silanen, Silazanen, Siloxanverbindungen und/oder siliziumorganischen Verbindungen modifiziert werden. Die Substituenten können beispielsweise bestehen aus -SCN, -SH, -Cl, $-NH_2$, -OC (O) $CH=CH_2$, -OC (O) C $(CH_3) = CH_2$, -S, $-S_2$, $-S_3$, $-S_4$, Aliphaten, Olefinen, Aromaten, Arylaromaten mit und ohne Hydroxy-, Amino-, Alkoxy-, Silanol-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat- und/oder Organosilanresten.

Bevorzugt werden bifunktionelle Silane verwendet, die einerseits eine Kopplung zu dem silanolgruppenhaltigen Füllstoff und andererseits eine Kopplung zum Polymer ermöglichen. Beispiele für diese Organosiliziumverbindungen sind:

Bis(3-triethoxysilylpropyl)tetrasulfan, Bis(3-triethoxysilylpropyl)disulfan, Vinyltrimethoxysilan, Vinyltriethoxysilan, 3-Mercaptopropyltrimethoxysilan, 3-Mercaptopropyltriethoxysilan, 3-Aminopropyltrimethoxysilan, 3-Aminopropyltriethoxysilan. Weitere Organosiliziumverbindungen, die eingesetzt werden können, sind in WO 99/09036, DE 10163945, DE 10223658 beschrieben. Der Inhalt der genannten Patentschriften wird hiermit explizit in den Inhalt der vorliegenden Anmeldung mit einbezogen. In einer bevorzugten Ausführungsform der Erfindung kann als Silan das Bis (3-triethoxysilylpropyl)polysulfan oder Bis(3-triethoxysilylpropyl)disulfan eingesetzt werden.

Im folgenden wird der Begriff "Teile" für Massenanteile verwendet.

Die Modifizierung des Siliciumdioxids in Schülpenform mit einem oder mehreren der genannten Verbindungen kann in Mischungen von 0,5 bis 50 Teilen, bezogen auf 100 Teile Fällungskieselsäure, insbesondere 1 bis 15 Teile und ganz besonders 1 bis 10 Teile, bezogen auf 100 Teile Siliciumdioxid erfolgen, wobei die Reaktion zwischen Siliciumdioxid und der genannten Verbindungen während der Gummimischungsherstellung (in situ) oder außerhalb durch Aufsprühen und anschließendes Tempern des mit einer oder mehreren der genannten Verbindungen vorbelegten Siliciumdioxides durchgeführt werden kann.

Der Kohlenstoffgehalt der modifizierten Kieselsäure kann 0,1 bis 20 Gew.-%, bevorzugt 0,1 bis 10 Gew.-% und besonders bevorzugt 0,5 bis 5 Gew.-% betragen.

Erfindungsgemäß können die zu Schülpen kompaktierten Siliciumdioxide in Elastomermischen, Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen eingesetzt werden.

Erfindungsgemäß können die zu Schülpen kompaktierten Siliciumdioxide in Elastomerenmischungen, Reifen oder vulkanisierbaren Kautschukmischungen als Verstärkerfüllstoff in Mengen von 5 bis 200 Teilen, bezogen auf 100 Teile Kautschuk sowohl modifiziert als auch ohne Modifizierung eingemischt werden.

Kautschuk- und Elastomerenmischungen sind im Sinne der vorliegenden Erfindung als äquivalent zu betrachten.

Neben Mischungen, die ausschließlich das erfindungsgemäß eingesetzte, zu Schülpen kompaktierte Siliciumdioxid Kieselsäuren mit und ohne der genannten organischen Nachbehandlung als Füllstoffe enthalten, können die Elastomeren- oder Kautschukmischungen zusätzlich mit einem oder mehreren mehr oder weniger verstärkenden Füllstoffen gefüllt sein.

Als weitere Füllstoffe können folgende Materialien eingesetzt werden:

Ruße: Die hierbei zu verwendenden Ruße sind nach dem Flammruß-, Furnace- oder Gasruß-Verfahren hergestellt und besitzen BET-Oberflächen von 20 bis 200 $m^2/g$, wie z. B. SAF-, ISAF-, HSAF-, HAF-, FEF- oder GPF-Ruße. Die Ruße können gegebenenfalls auch Heteroatome wie zum Beispiel Silizium enthalten.

Hochdisperse pyrogene Kieselsäuren, hergestellt zum Beispiel durch Flammenhydrolyse von Siliziumhalogeniden, können als Mischoxide mit anderen Metalloxiden, wie Al-, Mg-, Ca-, Ba-, Zn- und Titanoxiden vorliegen.

Weitere kommerzielle Kieselsäuren hergestellt in einem Fällungsprozeß mit BET-Oberflächen von 20 bis 400 $m^2/g$.

Synthetische Silicate, wie Aluminiumsilicat, Erdalkalisilicate wie Magnesiumsilicat oder Calciumsilicat, mit BET-Oberflächen von 20 bis 400 $m^2/g$ und Primärteilchendurchmessern von 10 bis 400 nm

Synthetische oder natürliche Aluminiumoxide und -hydroxide

Natürliche Silicate, wie Kaolin andere natürlich vorkommende Siliziumdioxidverbindungen

Glasfaser und Glasfaserprodukte (Matten, Stränge) oder Mikroglaskugeln

Stärke und modifizierte Stärketypen

Naturfüllstoffe, wie zum Beispiel Clays und Kieselkreide.

Das Verschnittverhältnis richtet sich auch hier nach dem zu erzielenden Eigenschaftsbild der fertigen Gummimischung. Ein Verhältnis von 5 bis 95 % zwischen dem erfindungsgemäß eingesetzten, zu Schülpen kompaktierten Siliciumdioxid und den anderen oben genannten Füllstoffen (auch als Gemisch) ist denkbar und wird in diesem Rahmen auch realisiert.

In einer besonders bevorzugten Ausführungsform können 10 bis 150 Gew.-Teile Siliciumdioxid, ganz oder teilweise bestehend aus dem erfindungsgemäß eingesetzten, zu Schülpen kompaktierten Siliciumdioxid, gegebenenfalls zusammen mit 0 bis 100 Gew.-Teilen Ruß, sowie 1 bis 10 Gew.-Teile einer Organosiliziumverbindung, jeweils bezogen auf 100 Gew.-Teile Kautschuk, zur Herstellung der Mischungen eingesetzt werden.

Neben dem erfindungsgemäß zu Schülpen kompaktierten Siliciumdioxid, den Organosilanen und anderen Füllstoffen bilden die Polymere einen weiteren wichtigen Bestandteil der Gummimischung. Zu nennen wären hierbei natürliche und synthetische Polymere, ölgestreckt oder nicht, als Einzelpolymer oder Verschnitt (Blend) mit anderen Kautschuken, wie zum Beispiel Naturkautschuke, Polybutadien (BR), Polyisopren (IR), Styrol/Butadien-Copolymerisate mit Styrolgehalten von 1 bis 60, vorzugsweise 2 bis 50 Gew.-% (SBR) insbesonders hergestellt mittels des Lösungspolymerisationsverfahrens, Butylkautschuke, Isobutylen/Isopren-Copolymerisate (IIR), Butadien/Acrylnitril-Copolymere mit Acrylnitrilgehalten von 5 bis 60, vorzugsweise 10 bis 50 Gew.-% (NBR), teilhydrierter oder vollständig hydrierter NBR-Kautschuk (HNBR), Ethylen/Propylen/Dien-Copolymerisate (EPDM), sowie Mischungen dieser Kautschuke.

Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Bevorzugte Synthesekautschuke sind beispielsweise bei W. Hofmann, "Kautschuktechnologie", Genter Verlag, Stuttgart 1980, beschrieben.

Für die Herstellung der erfindungsgemäßen Reifen sind insbesondere anionisch polymerisierte S-SBR-Kautschuke (Lösungs-SBR) mit einer Glasübergangstemperatur oberhalb von -50 °C sowie deren Mischungen mit Dienkautschuken von Interesse.

Die Einarbeitung des zu Schülpen kompaktierten Siliciumdioxids und die Herstellung der dieses Siliciumdioxid enthaltenden Mischungen erfolgt in der in der Gummiindustrie üblichen Art und Weise auf einem Innenmischer oder Walzwerk bei bevorzugt 80 bis 200 °C.

Die erfindungsgemäßen Kautschukvulkanisate können weitere Kautschukhilfsstoffe in den üblichen Dosierungen enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol und/oder Hexantriol. Diese Verbindungen sind in der Kautschukindustrie bekannt.

Die Kautschukhilfsmittel können in bekannten Mengen, die sich unter anderem nach dem Verwendungszweck richten, eingesetzt werden. Übliche Mengen sind zum Beispiel Mengen von 0,1 bis 50 Gew.-%, bezogen auf Kautschuk.

Als Vernetzer können Schwefel oder schwefelspendende Substanzen oder andere in der Kautschukindustrie bekannte Vernetzungssysteme eingesetzt werden.

Die erfindungsgemäßen Kautschukmischungen können darüber hinaus Vulkanisationsbeschleuniger, eingesetzt als Hauptbeschleuniger und Cobeschleumiger, enthalten.

Beispiele für geeignete Hauptbeschleuniger sind Mercaptobenzthiazole, Sulfenamide, Thiurame, Dithiocarbamate in Mengen von 0,5 bis 3 Gew.-%.

Beispiele für Cobeschleuniger sind Guanidiene, Thioharnstoffe und Thiocarbonate in Mengen von 0,5 bis 5 Gew.-%. Schwefel kann üblicherweise in Mengen von 0,1 bis 10 Gew.-%, bevorzugt 1 bis 3 Gew.-%, bezogen auf Kautschuk, eingesetzt werden.

Das erfindungsgemäße verwendete, zu Schülpen kompaktierte Siliciumdioxid kann in Kautschuken eingesetzt werden, die mit Beschleunigern und/oder Schwefel, aber auch peroxidisch vernetzbar sind.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der Organosiliziumverbindung kann in bekannten Mischaggregaten, wie Walzen, Innenmischern und Mischextrudern, durchgeführt werden.

Die erfindungsgemäßen Kautschukmischungen eignen sich zur Herstellung von Formkörpern, zum Beispiel für die Herstellung von Luftreifen, Reifenlaufflächen für Sommer-, Winter- und Ganzjahresreifen, PKW-Reifen, Reifen für Nutzfahrzeuge, Motorradreifen, Reifenunterbauteilen, Kabelmänteln, Schläuchen, Treibriemen, Förderbändern, Walzenbelägen, Schuhsohlen, Dichtungsringen und Dämpfungselementen.

Die erfindungsgemäßen Kautschukmischungen sind insbesondere für die Herstellung von PKW- und Motorrad-Reifenlaufflächen aber auch Reifen für Nutzfahrzeuge mit erniedrigtem Rollwiderstand bei gutem Abriebswiderstand und guter Wintertauglichkeit geeignet.

Ferner eignen sich die erfindungsgemäßen Kautschukmischungen ohne Zusatz von Organosiliziumverbindungen im Blend mit einem typischen Laufflächenruß auch zur Verbesserung des Cut & Chip-Verhaltens von Bau-, Landmaschinen- und Grubenreifen (Definition und weitere Ausführungen siehe "New insights into the tear mechanism" und Referenzen hierin, präsentiert auf der Tire Technology 2003 in Hamburg von Dr. W. Niedermeier) .

Die in den folgenden Beispielen angewandten physikalischen Prüfungen sind in Tabelle 1 dargestellt.

*Bestimmung des Dispersionskoeffizienten*

Der Dispersionskoeffizient läßt sich mittels einer topographischen Methode, beschrieben unter: "Entwicklung eines Verfahrens zur Charakterisierung der Füllstoffdispersion in Gummimischungen mittels einer Oberflächentopographie" A. Wehmeier; Diplomarbeit 1998 an der Fachhochschule Münster, Abteilung Steinfurt im Fachbereich Chemieingenieurwesen und "Filler dispersion Analysis by Topography Measurements" Degussa AG, Applied Technology Advanced Fillers, Technical Report TR 820, bestimmen.

Alternativ kann der Dispersionskoeffizient auch mittels dem DIAS Verfahren (lichtoptisch) am Deutschen Institut für Kautschuktechnologie in Hannover bestimmt werden (siehe H. Geisler, DIK aktuell, 1. Ausgabe (1997) und Medalia, Rubber Age, April 1965).

Der beste erreichbare Dispersionsgrad liegt bei 100 %, der theoretisch schlechteste würde demnach bei 0 % liegen. Kieselsäuren ab einem Dispersionskoeffizienten von größer oder gleich 90 % sind als hoch dispersibel (HD) einzustufen.

Erläuterung zur Bestimmung des Dispersionskoeffizienten mittels Oberflächentopographie:

$$Dispersionskoeffizient = 100\% - \frac{(Summe\ der Peakgrundflächen) \bullet 10000\% \bullet Medaliafaktor}{Füllstoffvolumen \bullet (untersuchte Gesamtfläche)} \%$$

$$Medaliafaktor = \frac{\frac{Füllstoffvolumen}{100\%} + 0{,}78}{2}$$

Dispersionskoeffizient in %
Summe der Peakgrundflächen (Maß für die Rauheit) in $mm^2$ Füllstoffvolumen in %
untersuchte Gesamtfläche in $mm^2$

Tabelle 1: Physikalische Testmethoden

| Physikalische Testung | Norm / Bedingungen |
|---|---|
| **Vulkameterprüfung, 165 °C,**<br>**0,5 ° Auslenkung**<br>**Rheometer MDR**<br>$M_H$ (dNm)<br>$M_H$ - $M_L$ (dNm)<br>t10 % (min)<br>t90 % (min)<br>t80 % - t20 % (min) | **DIN 53529/3, ISO 6502** |
| **Zugversuch am Ring, 23 °C**<br>Spannungswert (MPa)<br>Bruchdehnung (%) | **DIN 53504, ISO 37** |
| **Shore-A-Härte, 23 °C (SH)** | **DIN 53 505** |
| **Ball Rebound (%), 60 °C** | **DIN EN ISO 8307,** Fallhöhe 500 mm, Stahlkugel, d= 19 mm, 28 g |
| **DIN-Abrieb, 10 N Kraft ($mm^3$)** | **DIN 53 516** |
| **Dispersionskoeffizient (%)** | **siehe Text** |
| **Viskoelastische Eigenschaften,**<br>**50 N Vorkraft und 25 N Amplitudenkraft,**<br>**Temperierzeit 5 min,**<br>**Meßwertaufnahme nach 30 s Prüfzeit**<br>Komplexer Modul E* (MPa)<br>Verlustfaktor tan δ (-) | **DIN 53 513, ISO 2856** |
| **Compressions-Flexometer, 23°C** Einstichtemperatur (°C) Bleibende Verformung (%) | **DIN 53 533, ASTM D 623 A** Dauer 30 min Hub 0,225 Inch |

Beispiel 1

Herstellung von Br/S-SBR Kautschukmischungen und Vulkanisaten unter Verwendung von AEROSIL® 150

Allgemeine Durchführungsvorschrift:

Die für die Gummimischungen verwendete Rezeptur (Green-Tire) ist in der folgenden Tabelle 2 angegeben. Dabei bedeutet die Einheit "phr" Gewichtsanteile bezogen auf 100 Gewichtsanteile des eingesetzten Rohkautschuks.

Bei dem Polymer VSL 5025-1 handelt es sich um ein in Lösung polymerisiertes SBR-Copolymer der Bayer AG (heutige Lanxess Europe GmbH & Co. KG) mit einem Styrolgehalt (mittels UV Spektroskopie) von ca. 25 Gew.-% (23 Gew.-% - 27 Gew.-%) und einem Vinylgehalt (mittels IR Spektroskopie) von ca. 50 Gew.-% (46 Gew.-% - 54 Gew.-%). Das Copolymer enthält ca. 27 Gew.-% aromatisches Mineralöl (25,8 Gew.-% - 28,8 Gew.-%) und weist eine Mooney Viskosität (ASTM D 1646) von etwa 50 MU (45 MU - 55 MU) auf.

Bei dem Polymer Buna CB 24 handelt es sich um ein cis-1,4 Polybutadien (Titantyp) der Bayer AG (heutige Lanxess Europe GmbH & Co. KG) mit einem cis-1,4-Gehalt (mittels IR-Spektroskopie) von mind. 96 Gew.-% und einer Mooney Viskosität (DIN 53523) von etwa 45 MU (39 MU - 49 MU).

Tabelle 2: Rezeptur Green-Tire

| Green-Tire | | | |
|---|---|---|---|
| Substanz | phr | Artikelbezeichnung | Firma |
| 1. Stufe | | Grundmischen | |
| Buna VSL 5025-1 | 96 | S-SBR; ölverstreckt (siehe Text) | Lanxess Europe GmbH & Co. KG; 51369 Leverkusen; Deutschland |
| Buna CB 24 | 30 | cis-1,4-BR (siehe Text) | Lanxess Europe GmbH & Co. KG; 51369 Leverkusen; Deutschland |
| Kieselsäure (KS) | 80 | | |
| X 50-S | 11,64 | Si 69 (Bis(3-triethoxysilylpropyl) tetrasulfan) / Carbon Black des Typs N 330: 50 %/50% | Degussa AG; Frankfurt am Main; Deutschland |
| ZnO; RS RAL 844 C | 3 | ZnO | Arnsperger Chemikalien GmbH; 50858 Köln; Deutschland |
| EDENOR ST1 GS | 2 | Palmitinstearinsäure; Stearin "Jodzahl 1" | Caldic Deutschland GmbH & Co. KG; 40231 Düsseldorf; Deutschland |
| Naftolen ZD | 10 | aromatisches Weichmacheröl | Chemetall GmbH; 60487 Frankfurt a.M.; Deutschland |
| Vulkanox 4020 / LG | 1,5 | N-(1,3-dimethylbutyl)-N'-phenyl-p-phenylendiamin (6PPD) | Rhein Chemie Rheinau GmbH; 68219 Mannheim Rheinau; Deutschland |
| Protektor G 3108 | 1 | Mischung von raffinierten Kohlenwasserstoff-wachsen | Paramelt BV; 706875 Paramelt BV; NL 1704 RJ Heerhugowaard; Niederlande |
| 2. Stufe | | Zwicken / remill Stufe | |
| Batch Stufe 1 | | | |
| 3. Stufe | | Fertigmischen | |
| Batch Stufe 2 | | | |
| Vulkacit D | 2 | N,N'-Diphenylguanidin (DPG) | Rhein Chemie Rheinau GmbH; 68219 Mannheim Rheinau; Deutschland |
| Vulkacit CZ/EG-C | 1,5 | N-Cyclohexyl-2-benzothiazolsulfenamid (CBS) | Rhein Chemie Rheinau GmbH; 68219 Mannheim Rheinau; Deutschland |
| Perkacit TBZTD-C | 0,2 | Tetrabenzylthiuramdisulfid (TBzTD) | Flexsys N.V./S.A., Woluwe Garden; B-1932 St. Stevens Woluwe; Belgien |
| Mahlschwefel | 1,5 | Schwefel fein verteilt Ph Eur, BP | Merck KGaA; 64271 Darmstadt; Deutschland |

Das allgemeine Verfahren zur Herstellung von Kautschukmischungen und deren Vulkanisate ist in folgendem Buch beschrieben: "Rubber Technology Handbook", W. Hofmann, Hanser Verlag 1994. Mischvorschrift und -Bedingungen für die hier verwendete Green-Tire Mischung sind in Tabelle 3 beschrieben.

Tabelle 3: Mischvorschrift und -Bedingungen für Green-Tire Mischungen

| | |
|---|---|
| 1. Stufe | Innenmischer GK 1.5N, Füllgrad 0,73, |
| | 70 U/min, Durchflußtemperatur 70 °C, |
| | Stempeldruck 5,5 bar |

(fortgesetzt)

| | | | |
|---|---|---|---|
| **1. Stufe** | Innenmischer GK 1.5N, Füllgrad 0,73, | | |
| 0,0' - 0,5' | Polymere | | |
| 0,5' - 1,5' | 1/3 KS, X 50-S; bei 1,5' säubern | | |
| 1,5' - 2,5' | 1/3 KS; bei 2,5' säubern | | |
| 2,5' - 3,5' | 1/3 KS, restliche Bestandteile der 1. Stufe; bei 3,5' säubern | | |
| 3,5' - 5,0' | mischen, ggf. Drehzahlvariation erforderlich, | | |
| | um die Auswurftemperatur zu erreichen | | |
| 5,0' | Batch ausfahren (Batchtemperatur 145 °C - 155 °C) | | |
| | und auf die Walze geben: | | |
| | Fell ausziehen | | |
| 24 h Zwischenlagerung bei Raumtemperatur zur Stufe 2 | | | |
| | | | |
| **2. Stufe** | Innenmischer GK 1.5N, Füllgrad 0,71, | | |
| | 80 U/min, Durchflußtemperatur 80 °C, | | |
| | Stempeldruck 5,5 bar | | |
| 0,0' - 2,0' | Batch Stufe 1 plastizieren | | |
| 2,0' - 5,0' | Batchtemperatur 150 °C halten durch Drehzahlvariation | | |
| 5,0' | Batch ausfahren (Batchtemperatur 145 °C - 155 °C) | | |
| | und auf die Walze geben: | | |
| | Fell ausziehen | | |
| 4 h Zwischenlagerung bei Raumtemperatur zur Stufe 3 | | | |
| | | | |
| **3. Stufe** | Innenmischer GK 1.5N, Füllgrad 0,69, | | |
| | 40 U/min, Durchflußtemperatur 50 °C, | | |
| | Stempeldruck 5,5 bar | | |
| 0,0' - 2,0' | Batch Stufe 2, Beschleuniger, Schwefel | | |
| 2,0' | Batch ausfahren (Batchtemperatur 90 °C - 110 °C) | | |
| | und auf die Walze geben: | | |
| | 3*links, 3*rechts einschneiden, umlegen, | | |
| | 5*eng, 5*weit stürzen, | | |
| | Fell ausziehen | | |
| 12 h Zwischenlagerung bei Raumtemperatur bis zum Beginn der Prüfungen | | | |

Die Vulkanisationszeit für die Prüfkörper beträgt für Beispiel 1 bei 165 °C jeweils 17 min

Die Ergebnisse der gummitechnischen Prüfung sind in Tabelle 4 angegeben. Bei allen drei Mustern handelt es sich um AEROSIL® 150, das in unterschiedlicher Weise nachbehandelt wurde: Muster A ist gemäß EP0280851 vorverdichtet, Muster B und C sind erfindungsgemäß wie in Figur 1 schematisch dargestellt kompaktiert. Ausgangsmaterial für Muster B ist Muster A, für Muster C ein nicht vorverdichtetes AEROSIL® 150.

Alle drei Muster zeigen vergleichbare gummitechnische Eigenschaften und sind hoch dispersibel einzustufen.

Tabelle 4: Ergebnisse der gummitechnischen Prüfung für Beispiel 1

| **Green-Tire Füllstoff: AEROSIL® A 150** | | **Muster A Vorverdichtet gemäß EP0280851** | **Muster B erfindungsgemäße Schülpen** | **Muster C erfindungsgemäße Schülpen** |
|---|---|---|---|---|
| Stampfdichte | g/l | 121 | 282 | 249 |
| *MDR: 165 °C; 0.5°* | | | | |
| $M_H$ | dNm | 24,0 | 24,2 | 25,0 |
| $M_H$ - $M_L$ | dNm | 20,8 | 20,9 | 21,9 |
| t10 % | min | 0,9 | 0,8 | 0,7 |
| t90 % | min | 4,9 | 4,9 | 5,3 |
| t80 % - t20 % | min | 1,8 | 1,8 | 2,0 |
| Spannungswert (300 %) | MPa | 10,7 | 10,8 | 11,7 |
| Bruchdehnung | % | 370 | 385 | 345 |
| Shore-A-Härte | SH | 69 | 70 | 69 |
| DIN-Abrieb, 10 N | $mm^3$ | 84 | 84 | 87 |
| Ball-Rebound, 23 °C | % | 30,5 | 29,2 | 29,8 |
| Ball-Rebound, 60 °C | % | 55,2 | 56,5 | 56,6 |
| *Dispersion* | | | | |
| Dispersionskoeffizient | % | 98 | 94 | 99 |

Beispiel 2

Herstellung von Br/S-SBR Kautschukmischungen und Vulkanisaten unter Verwendung von verschiedenartigen AEROSIL® Granulaten

Die Rezeptur für Beispiel 2 entspricht Beispiel 1, lediglich die Menge an X 50-S wurde auf 12,8 phr angehoben. Die Mischvorschrift und -bedingungen sind in Tabelle 5 angegeben die Ergebnisse der physikalischen Testung in Tabelle 6. Die Vulkanisationszeit für die Prüfkörper beträgt für Beispiel 2 bei 165 °C jeweils 30 min.

Muster D ist ein gemäß EP 0 725 037 A1 granuliertes AEROSIL® 200, Muster E ist ein gemäß EP 0 393 356 A1 granuliertes AEROSIL®, Muster C ist in Beispiel 1 beschrieben.

Muster D weist im Vergleich zu Muster C aufgrund der höheren spezifischen Oberfläche eine höhere Verstärkung auf. Beide Muster sind als hoch dispersibel einzustufen, Muster D zeigt jedoch eine höhere Staubbelastung (v gl. Figur 4). Muster E erreicht weder bei der Verstärkung noch beim Dispersionskoeffizienten die Werte der beiden anderen Muster.

Tabelle 5: Mischvorschrift und -bedingungen für Beispiel 2

| **1. Stufe** | Innenmischer Brabender 350 S, Füllgrad 0,73, |
|---|---|
| | 70 U/min, Durchflußtemperatur 80 °C, |
| | Stempeldruck 5 bar |
| 0,0’ - 0,5’ | Polymere |
| 0,5’ - 1,5’ | 1 /3 KS, X 50-S; bei 1,5’ säubern |
| 1,5’ - 2,5’ | 1/3 KS; bei 2,5’ säubern |
| 2,5’ - 3,5’ | 1/3 KS, restliche Bestandteile der 1. Stufe; bei 3,5’ säubern |
| 3,5’ - 5,0’ | mischen, ggf. Drehzahlvariation erforderlich, |
| | um die Auswurftemperatur zu erreichen |
| 5,0’ | Batch ausfahren (Batchtemperatur 145 °C - 155 °C) |
| | und auf die Walze geben: |

(fortgesetzt)

| | | | |
|---|---|---|---|
| **1. Stufe** | Innenmischer Brabender 350 S, Füllgrad 0,73, | | |
| | Fell ausziehen | | |
| 24 h Zwischenlagerung bei Raumtemperatur zur Stufe 2 | | | |
| | | | |
| **2. Stufe** | Innenmischer Brabender 350 S, Füllgrad 0,71, | | |
| | 80 U/min, Durchflußtemperatur 90 °C, | | |
| | Stempeldruck 5 bar | | |
| 0,0' - 2,0' | Batch Stufe 1 plastizieren | | |
| 2,0' - 5,0' | Batchtemperatur 150 °C halten durch Drehzahlvariation | | |
| 5,0' | Batch ausfahren (Batchtemperatur 145 °C - 155 °C) | | |
| | und auf die Walze geben: | | |
| | Fell ausziehen | | |
| 4 h Zwischenlagerung bei Raumtemperatur zur Stufe 3 | | | |
| | | | |
| **3. Stufe** | Innenmischer Brabender 350 S, Füllgrad 0,69, | | |
| | 50 U/min, Durchflußtemperatur 60 °C, | | |
| | Stempeldruck 5 bar | | |
| 0,0'- 2,0' | Batch Stufe 2, Beschleuniger, Schwefel | | |
| 2,0' | Batch ausfahren (Batchtemperatur 90 °C - 110 °C) | | |
| | und auf die Walze geben: | | |
| | 3*links, 3*rechts einschneiden, umlegen, | | |
| | 5*eng, 5*weit stürzen, | | |
| | Fell ausziehen | | |
| 12 h Zwischenlagerung bei Raumtemperatur bis zum Beginn der Prüfungen | | | |

Tabelle 6: Ergebnisse der gummitechnischen Prüfung für Beispiel 2

| **Green-Tire Füllstoff: AEROSIL$^R$** | | **Muster D Granuliert gemäß** EP0725037A1 | **Muster E Granuliert gemäß** EP0393356A1 | **Muster C erfindungsgemäße Schülpen** |
|---|---|---|---|---|
| Zugfestigkeit | MPa | 17,0 | 13,8 | 15,6 |
| Bruchdehnung | % | 350 | 240 | 290 |
| Shore-A-Härte | SH | 77 | 86 | 74 |
| DIN-Abrieb, 10 N | $mm^3$ | 93 | 89 | 90 |
| *Dispersion* | | | | |
| Dispersionskoeffizient | % | 97 | 69 | 98 |

Beispiel 3

Herstellung von NR Kautschukmischungen und Vulkanisaten unter Verwendung von AEROSIL® 150

Die Muster aus Beispiel 1 wurden entsprechend der in Tabelle 7 dargestellten in Anlehnung an eine LKW Reifenlauffläche gestalteten Rezeptur nach der in Tabelle 8 dargestellten Mischvorschrift eingemischt.

Die Ergebnisse der gummitechnischen Prüfung sind in Tabelle 9 zusammengefaßt. Die Vulkanisationszeit für die Prüfkörper beträgt für Beispiel 3 bei 165 °C jeweils 40 min. Das vorverdichtete Pulver und die erfindungsgemäß kompaktierten Schülpen liefern vergleichbare Ergebnisse. Alle drei Muster sind als hoch dispersibel einzustufen.

Tabelle 7: Rezeptur Naturkautschukmischung für Beispiel 3

| **NR** | | | |
|---|---|---|---|
| Substanz | phr | Artikelbezeichnung | Firma |
| **1. Stufe** | | **Grundmischen** | |
| SVR 10 | 100 | Polyisopren | Nordmann, Rassmann GmbH 20459 Hamburg; Deutschland |
| Kieselsäure (KS) | 52 | | Degussa AG; Frankfurt am Main; Deutschland |
| Si 266 | 3,46 | Si 266 (Bis(3-triethoxysilylpropyl) disulfan) | Degussa AG; Frankfurt am Main; Deutschland |
| ZnO; RS RAL 844 C | 3 | ZnO | Arnsperger Chemikalien GmbH; 50858 Köln; Deutschland |
| EDENOR ST1 GS | 3 | Palmitinstearinsäure; Stearin "Jodzahl 1" | Caldic Deutschland GmbH & Co. KG; 40231 Düsseldorf; Deutschland |
| Vulkanox 4020 / LG | 1 | N-(1,3-dimethylbutyl)-N'-phenyl-p-phenylendiamin (6PPD) | Rhein Chemie Rheinau GmbH; 68219 Mannheim Rheinau; Deutschland |
| Vulkanox HS/LG | 1 | 2,2,4-trimethyl-1,2-dihydrochinolin | Rhein Chemie Rheinau GmbH; 68219 Mannheim Rheinau; Deutschland |
| Protektor G 3108 | 1 | Mischung von raffinierten Kohlenwasserstoffwachsen | Paramelt BV; 706875 Paramelt BV; NL 1704 RJ Heerhugowaard; Niederlande |
| **2. Stufe** | | **Zwicken / remill Stufe** | |
| Batch Stufe 1 | | | |
| **3. Stufe** | | **Fertigmischen** | |
| Batch Stufe 2 | | | |
| Rhenogran DPG-80 | 1,18 | 80 % -N,N'-Diphenylguanidin (DPG) | Rhein Chemie Rheinau GmbH; 68219 Mannheim Rheinau; Deutschland |
| Rhenogran TBBS-80 | 2 | 80 % -N-tert.-Butyl-2-benzothiazolsulfenamid (TBBS) | Rhein Chemie Rheinau GmbH; 68219 Mannheim Rheinau; Deutschland |
| Mahlschwefel | 1,5 | Schwefel fein verteilt Ph Eur, BP | Merck KGaA; 64271 Darmstadt; Deutschland |

Tabelle 8: Mischvorschrift und -bedingungen für Beispiel 3

| **1. Stufe** | Innenmischer GK 1.5N, Füllgrad 0,73, | | |
|---|---|---|---|
| | 45 U/min, Durchflußtemperatur 70 °C, | | |
| | Stempeldruck 5,5 bar | | |
| 0,0' - 1,0' | Polymere | | |
| 1,0'-2,0' | 1/2 KS, Silan | | |
| 2,0'- 4,0' | 1/2 KS, restliche Bestandteile Stufe 1 | | |
| 4,0' | Säubern | | |
| 4,0' - 5,0' | mischen, ggf. Drehzahlvariation erforderlich, | | |

(fortgesetzt)

| | | |
|---|---|---|
| **1. Stufe** | Innenmischer GK 1.5N, Füllgrad 0,73, | |
| | um die Auswurftemperatur zu erreichen | |
| 5,0’ | Batch ausfahren (Batchtemperatur 145 °C - 155 °C) | |
| | und auf die Walze geben: | |
| | Fell ausziehen | |
| 24 h Zwischenlagerung bei Raumtemperatur zur Stufe 2 | | |
| | | |
| **2. Stufe** | Innenmischer GK 1.5N, Füllgrad 0,71, | |
| | 70 U/min, Durchflußtemperatur 90 °C, | |
| | Stempeldruck 5,5 bar | |
| 0,0’ - 1,0’ | Batch Stufe 1 plastizieren | |
| 1,0’ - 3,5’ | Batchtemperatur 145 °C - 150 °C halten durch Drehzahlvariation | |
| 3,5’ | Batch ausfahren (Batchtemperatur 145 °C - 150 °C) | |
| | und auf die Walze geben: | |
| | Fell ausziehen | |
| 4 h Zwischenlagerung bei Raumtemperatur zur Stufe 3 | | |
| | | |
| **3. Stufe** | Innenmischer GK 1.5N, Füllgrad 0,69, | |
| | 50 U/min, Durchflußtemperatur 70 °C, | |
| | Stempeldruck 5,5 bar | |
| 0,0’ - 2,0’ | Batch Stufe 2, Beschleuniger, Schwefel | |
| 2,0’ | Batch ausfahren (Batchtemperatur 100 °C - 110 °C) | |
| | und auf die Walze geben: | |
| | 3*links, 3*rechts einschneiden, umlegen, | |
| | 3*eng, 3*weit stürzen, | |
| | Fell ausziehen | |
| 12 h Zwischenlagerung bei Raumtemperatur bis zum Beginn der Prüfungen | | |

Tabelle 9: Ergebnisse der gummitechnischen Prüfung für Beispiel 3

| **Naturkautschuk Füllstoff: AEROSIL$^R$ A 150** | | **Muster A Vorverdichtet gemäß EP0280851** | **Muster B erfindungsgemäße Schülpen** | **Muster C erfindungsgemäße Schülpen** |
|---|---|---|---|---|
| Stampfdichte | g/l | 121 | 282 | 249 |
| *MDR:* 165 °C; 0.5° | | | | |
| $M_H$ | dNm | 16,8 | 17,5 | 17,2 |
| $M_H$ - $M_L$ | dNm | 14,8 | 15,4 | 15,0 |
| t10 % | min | 10,2 | 11,0 | 11,0 |
| t90 % | min | 22,6 | 22,8 | 22,0 |
| t80 % - t20 % | min | 6,1 | 5,7 | 5,2 |
| Spannungswert (300 %) | MPa | 9,2 | 8,6 | 8,5 |

(fortgesetzt)

| **Naturkautschuk Füllstoff: AEROSIL$^R$ A 150** | | **Muster A Vorverdichtet gemäß EP0280851** | **Muster B erfindungsgemäße Schülpen** | **Muster C erfindungsgemäße Schülpen** |
|---|---|---|---|---|
| Bruchdehnung | % | 555 | 580 | 570 |
| Shore-A-Härte | SH | 64 | 65 | 64 |
| DIN-Abrieb, 10 N | $mm^3$ | 117 | 121 | 117 |
| *Dispersion*<br>Dispersionskoeffizient | % | 98 | 98 | 98 |

Beispiel 4

Herstellung von EPDM Kautschukmischungen und Vulkanisaten unter Verwendung von AEROSIL® R 972

Die Rezeptur für Beispiel 4 ist in Tabelle 10 dargestellt. Die allgemeine Mischvorschrift und -bedingungen sind in Tabelle 5 angegeben die Ergebnisse der physikalischen Testung in Tabelle 6. Die Vulkanisationszeit für die Prüfkörper beträgt für Beispiel 4 bei 170 °C jeweils 20 min.

Wie dem Fachmann bekannt, kann die Mischvorschrift für Produkte mit niedriger Stampfdichte und hoher Staubentwicklung nicht eingehalten werden. Die Pulverzugabe hat dann in mehreren Schritten zu erfolgen. Dementsprechend wurde bei Muster G(3x) die Kieselsäure in drei bei Muster G(5x) in fünf gleiche Teile aufgeteilt, die nacheinander zugegeben wurden. Dadurch ergibt sich eine im Vergleich zu den erfindungsgemäßen Schülpen verlängerte Mischzeit.

Die drei Muster zeigen weitgehend vergleichbare gummitechnische Eigenschaften, Muster G(5x) liefert etwas niedrigere Werte für Zugfestigkeit, Bruchdehnung und Ball Rebound.

Tabelle 10: Rezeptur EPDM Kautschukmischung für Beispiel 4

| **EPDM** | | | |
|---|---|---|---|
| Substanz | phr | Artikelbezeichnung | Firma |
| **1. Stufe** | | **Grundmischen** | |
| Buna EP G 5455 | 150 | Copolymerisat aus Propen, Ethen und Ethylidennorbornen (EPDM) | Rhein Chemie Rheinau GmbH; 68219 Mannheim Rheinau; Deutschland |
| Kieselsäure (KS) | 80 | | Degussa AG; Frankfurt am Main; Deutschland |
| ZnO; RS RAL 844 C | 4 | ZnO | Arnsperger Chemikalien GmbH; 50858 Köln; Deutschland |
| EDENOR ST1 GS | 2 | Palmitinstearinsäure; Stearin "Jodzahl 1" | Caldic Deutschland GmbH & Co. KG; 40231 Düsseldorf; Deutschland |
| Weichnmacher NS | 30 | Mineralölraffinat | Fuchs Mineralöl Eschweiler; 52249 Eschweiler; Deutschland |
| Vulkanox MB/MG | 1 | 2-Mercaptobenzimidazol (MBI) | Rhein Chemie Rheinau GmbH; 68219 Mannheim Rheinau; Deutschland |
| **2. Stufe** | | **Fertigmischen** | |
| Batch Stufe 1 | | | |
| Rhenocure TP/S | 2 | 67 % Zinksalz eines Dithiophosphorsäureesters | Rhein Chemie Rheinau GmbH; 68219 Mannheim Rheinau; Deutschland |
| Vulkacit Mercapto C | 1 | 2-Mercaptobenzothiazol (MBT) | Bayer Material Science AG; 51358 Leverkusen; Deutschland |

(fortgesetzt)

| 2. Stufe | | Fertigmischen | |
|---|---|---|---|
| Vulkacit D | 1,5 | N,N'-Diphenylguanidin (DPG) | Rhein Chemie Rheinau GmbH; 68219 Mannheim Rheinau; Deutschland |
| Rhenogran S-80 | 2 | Schwefel 1 Polymerbinder : 80% 1 20% | Rhein Chemie Rheinau GmbH; 68219 Mannheim Rheinau; Deutschland |
| Vulkazit ZBEC | 0,8 | Zinkdibenzyldithiocarbamat | Rhein Chemie Rheinau GmbH; 68219 Mannheim Rheinau; Deutschland |

Tabelle 11: Mischvorschrift und -bedingungen für Beispiel 4

| **1. Stufe** | Innenmischer GK 1.5N, Füllgrad 0,73, |
|---|---|
| | 60 U/min, Durchflußtemperatur 50 °C, |
| | Stempeldruck 5,5 bar |
| 0,0' - 1,0' | Polymere |
| 1,0' - 3,0' | KS und übrige Bestandteile Stufe1 |
| 3,0' | säubern 11 |
| 3,0' - 4,0' | mischen, ggf. Drehzahlvariation erforderlich, |
| | um die Auswurftemperatur zu erreichen |
| 4,0' | Batch ausfahren (Batchtemperatur 90 °C - 130 °C) |
| | und auf die Walze geben: |
| | Fell ausziehen |
| 24 h Zwischenlagerung bei Raumtemperatur zur Stufe 2 | |
| | |
| **2. Stufe** | Innenmischer GK 1.5N, Füllgrad 0,71, |
| | 50 U/min, Durchflußtemperatur 40 °C, |
| | Stempeldruck 5,5 bar |
| 0,0' - 1,0' | Batch Stufe 1 |
| 1,0' - 2,0' | Beschleuniger Schwefel |
| 2,0' | Batch ausfahren (Batchtemperatur 80 °C - 100 °C) |
| | und auf die Walze geben: |
| | 3*eng, 3*weit stürzen, |
| | Fell ausziehen |
| 24 h Zwischenlagerung bei Raumtemperatur bis zum Beginn der Prüfungen | |

Tabelle 12: Ergebnisse der gummitechnischen Prüfung für Beispiel 4

| **EPDM Füllstoff: AEROSIL$^R$ R 972 (hydrophob)** | | **Muster F erfindungsgemäße Schülpen** | **Muster G(3x) Vorverdichtet gemäß EP0280851** | **Muster G(5x) Vorverdichtet gemäß EP0280851** |
|---|---|---|---|---|
| Stampfdichte | g/l | 378 | 115 | 115 |
| *MDR:* 165 °C; 0.5° $M_H$ | dNm | 14,5 | 15,0 | 15,5 |

(fortgesetzt)

| EPDM Füllstoff: AEROSIL$^R$ R 972 (hydrophob) | | Muster F erfindungsgemäße Schülpen | Muster G(3x) Vorverdichtet gemäß EP0280851 | Muster G(5x) Vorverdichtet gemäß EP0280851 |
|---|---|---|---|---|
| Stampfdichte | g/l | 378 | 115 | 115 |
| $M_H$ - $M_L$ | dNm | 12,1 | 12,3 | 12,6 |
| t10 % | min | 0,5 | 0,6 | 0,6 |
| t90 % | min | 9,8 | 9,4 | 9,9 |
| t80 % - t20 % | min | 5,3 | 5,0 | 5,3 |
| Zugfestigkeit | MPa | 9,5 | 9,6 | 7,7 |
| Bruchdehnung | % | 650 | 615 | 580 |
| Shore-A-Härte | SH | 49 | 52 | 53 |
| Ball-Rebound, 23 °C | % | 49,2 | 49,5 | 48,0 |
| *Dispersion* | | | | |
| Dispersionskoeffizient | % | 90 | 96 | 92 |

## Patentansprüche

1. Verfahren zur Herstellung von Gummimischungen, bei welchem pyrogen hergestelltes Siliciumdioxid neben anderen Bestandteilen zugemischt wird, **dadurch gekennzeichnet, daß** man das pyrogen hergestellte Siliciumdioxid in Form von Schülpen mit einer Stampfdichte (nach DIN EN ISO 787-11) von 185 bis 700 g/l einsetzt.

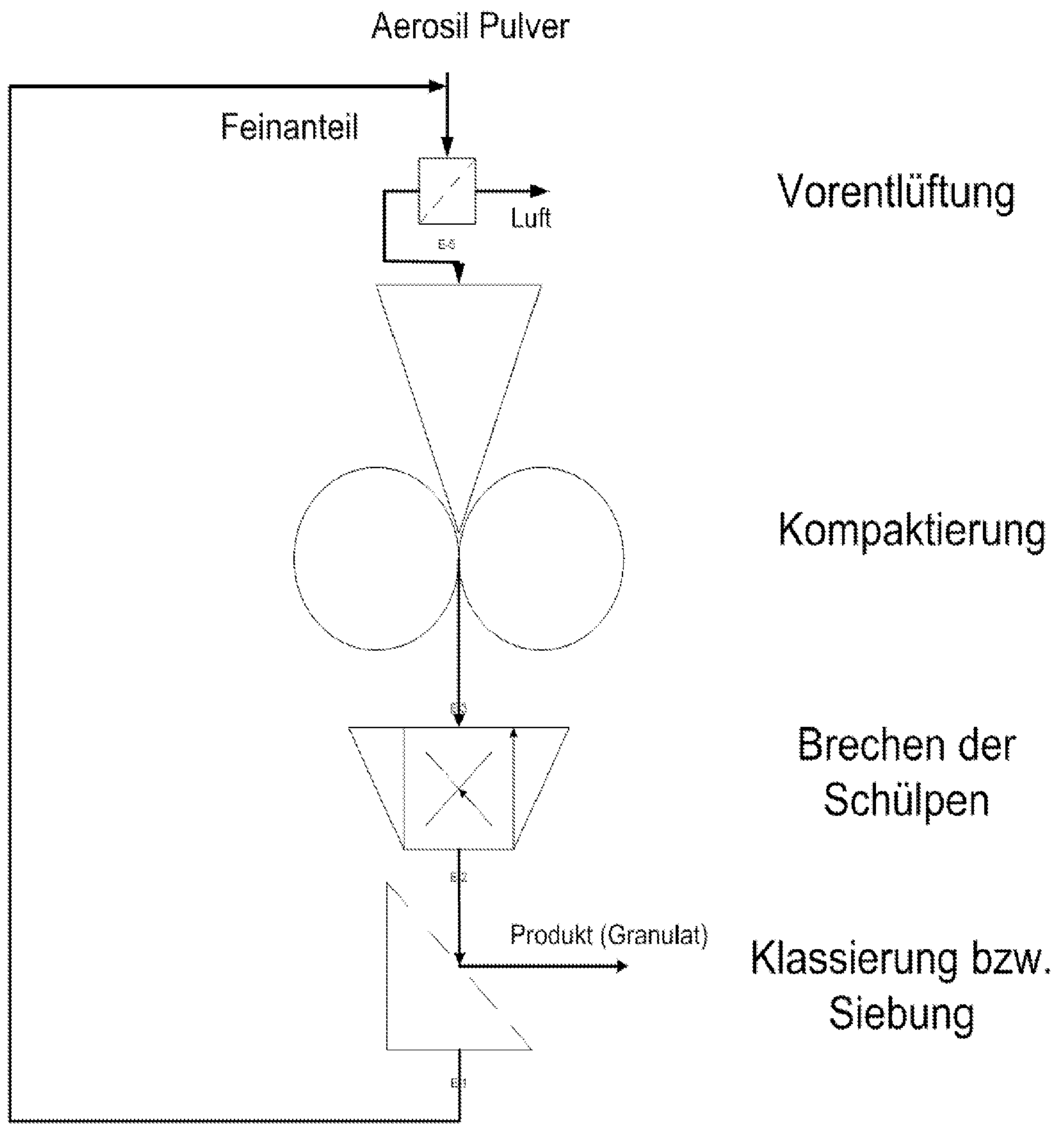
Aerosil Pulver
Feinanteil
Luft
Vorentlüftung
Kompaktierung
Brechen der
Schülpen
Produkt (Granulat)
Klassierung bzw.
Siebung

Figur 1

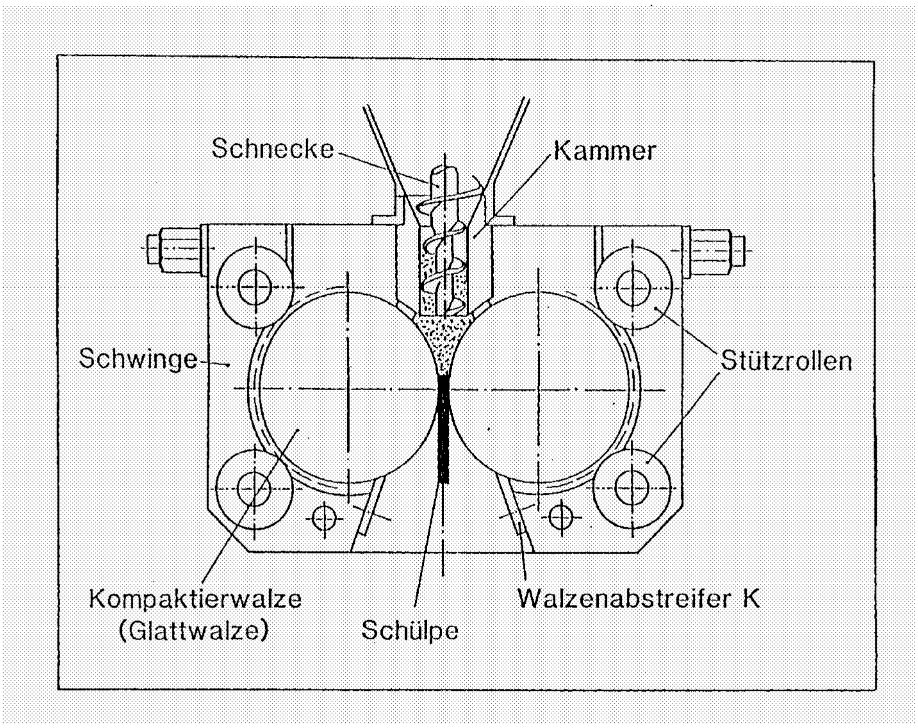
Schnecke
Kammer
Schwinge
Stützrollen
Kompaktierwalze
(Glattwalze)
Schülpe
Walzenabstreifer K

Figur 2

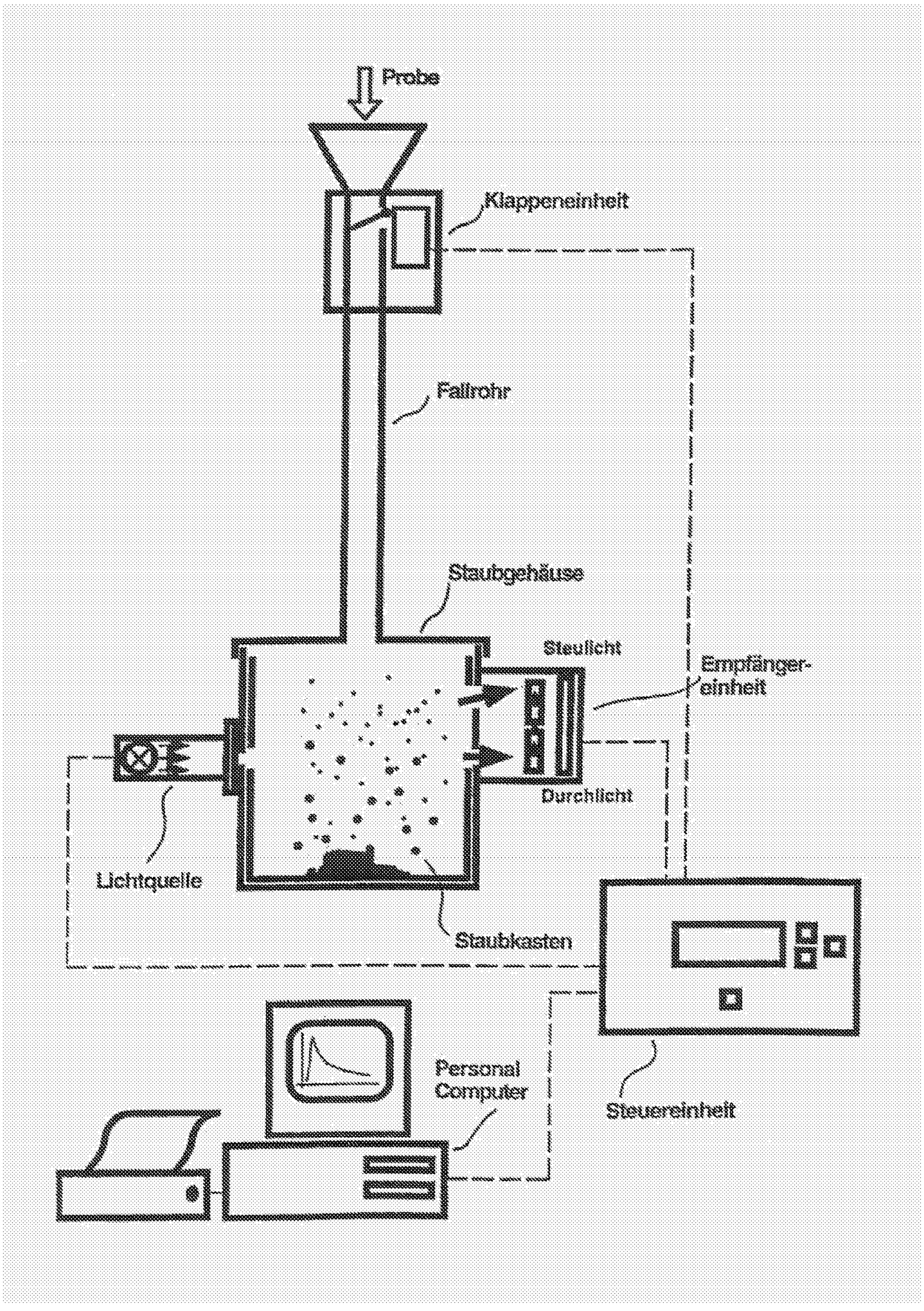


Schematischer Aufbau des Sedimentations-Staubmessgerätes

Figur 3

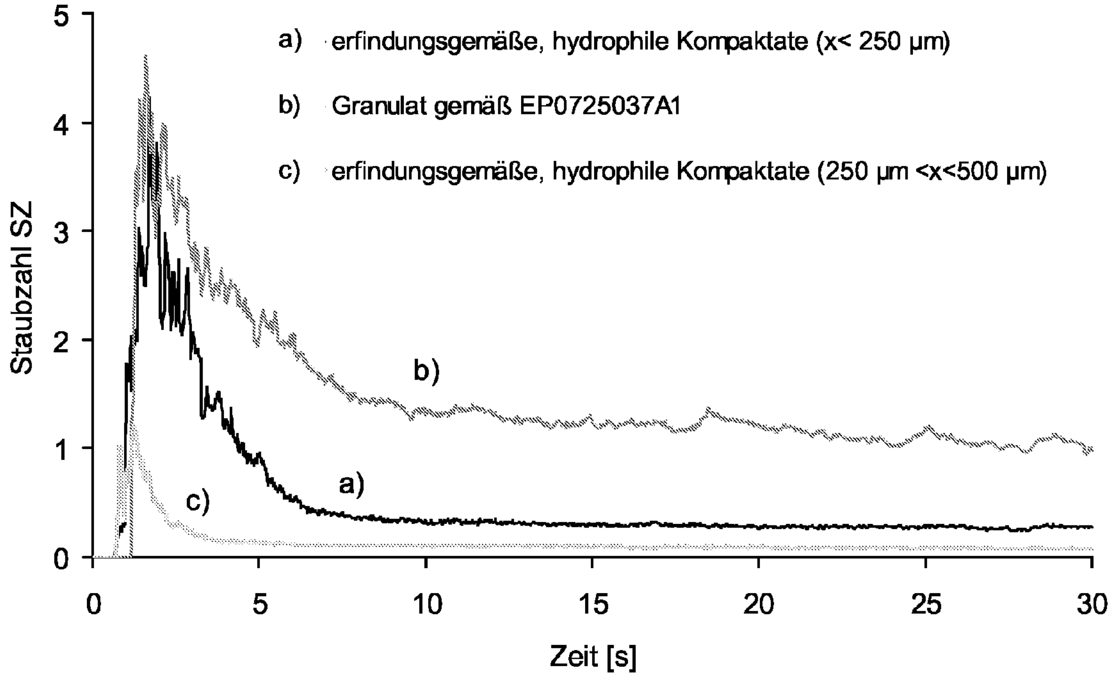
a) erfindungsgemäße, hydrophile Kompaktate (x< 250 µm)
b) Granulat gemäß EP0725037A1
c) erfindungsgemäße, hydrophile Kompaktate (250 µm <x<500 µm)
Staubzahl SZ
Zeit [s]
a)
b)
c)
0
1
2
3
4
5
0
5
10
15
20
25
30

Figur 4

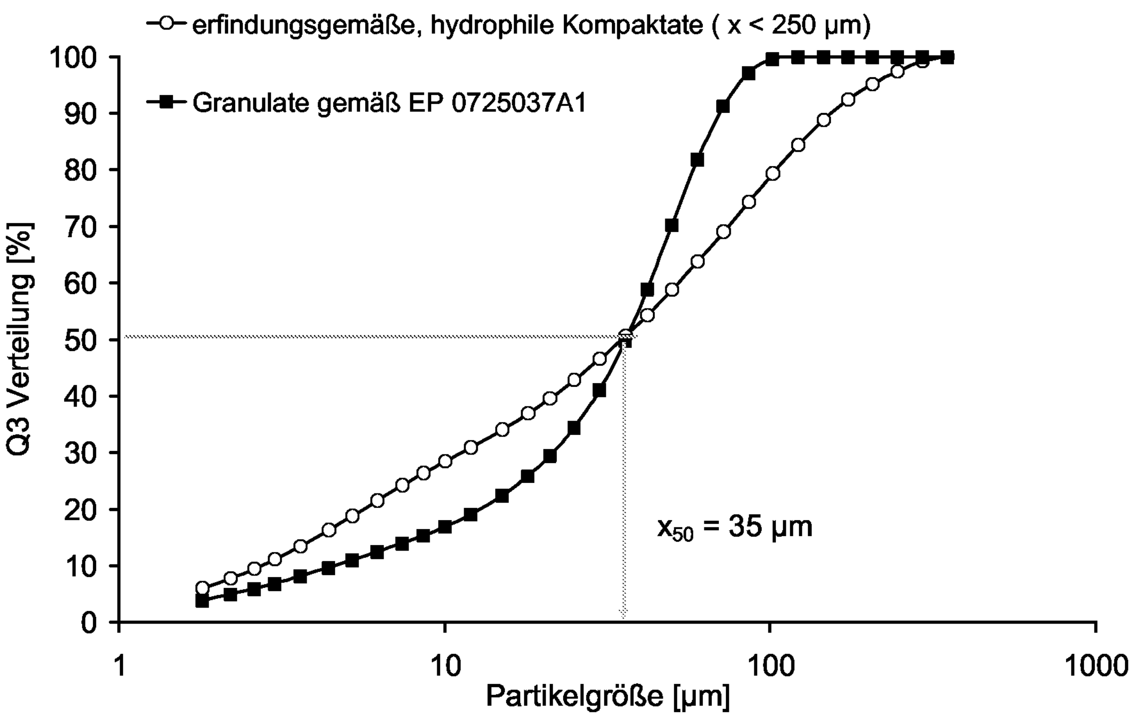
erfindungsgemäße, hydrophile Kompaktate ( x < 250 µm)
Granulate gemäß EP 0725037A1
Q3 Verteilung [%]
100
90
80
70
60
50
40
30
20
10
0
$x_{50}$ = 35 µm
1
10
100
1000
Partikelgröße [µm]

Figur 5

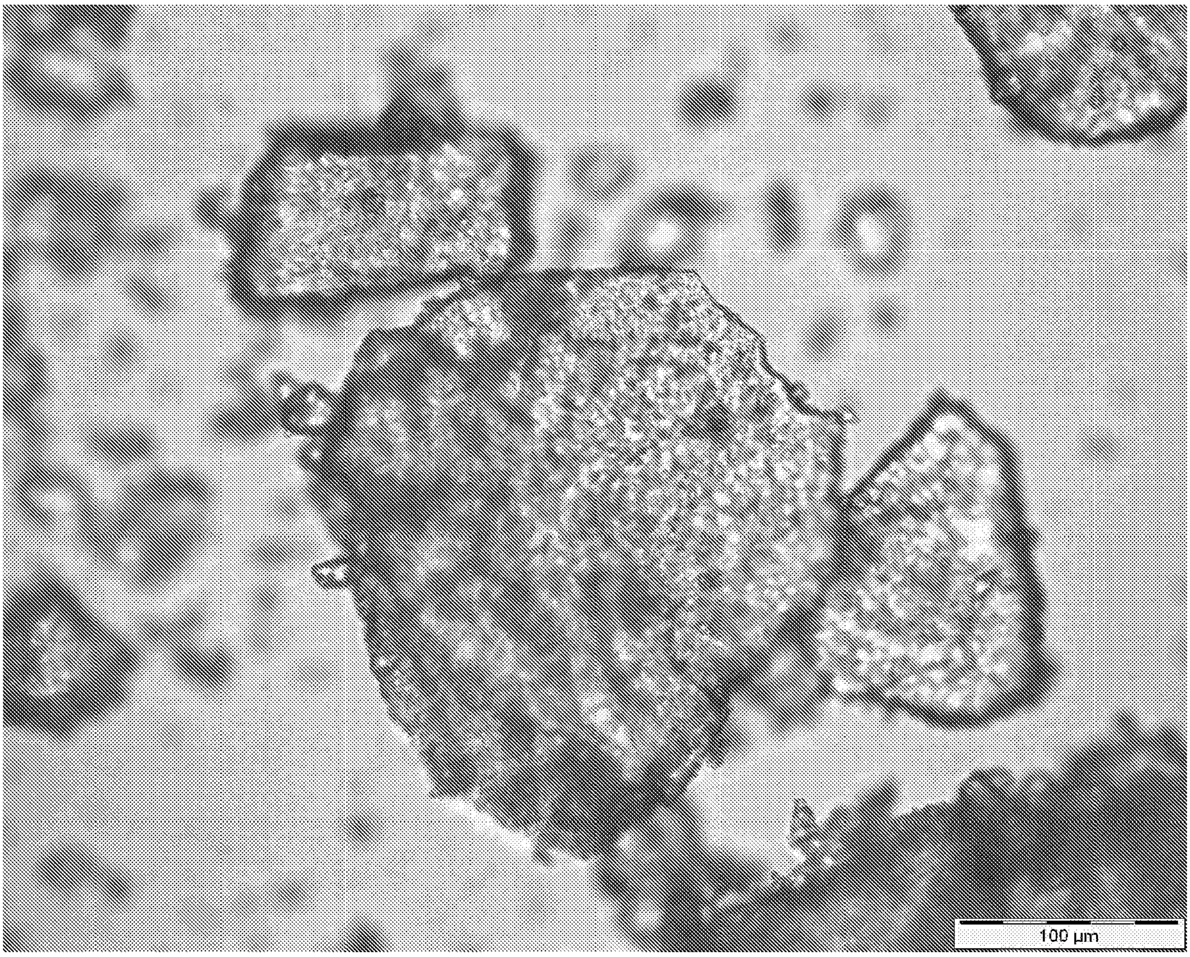


Figur 6

Europäisches Patentamt

# EUROPÄISCHER RECHERCHENBERICHT

Nummer der Anmeldung
EP 06 10 0823

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 37 41 846 A1 (DEGUSSA AG) 26. Januar 1989 (1989-01-26) * Abbildung * * Beispiel a) * ----- | 1 | INV. C01B33/12 C09C1/30 C08K3/36 |
| X | DE 103 56 042 A1 (DEGUSSA AG) 7. Juli 2005 (2005-07-07) * Absatz [0011] * * Absätze [0084], [0087] * * Anspruch 1 * ----- | 1 | |
| A | DE 199 36 478 A1 (DEGUSSA-HUELS AG) 15. Februar 2001 (2001-02-15) * Ansprüche 1,14 * ----- | 1 | |
| A | DE 11 29 459 B (DEUTSCHE GOLD- UND SILBER-SCHEIDEANSTALT VORMALS ROESSLER) 17. Mai 1962 (1962-05-17) * Spalte 1, Zeile 6 - Zeile 13 * * Spalte 4, Zeile 19 - Zeile 38 * * Abbildungen 1,2 * ----- | 1 | RECHERCHIERTE SACHGEBIETE (IPC) |
| A | DE 18 07 714 B1 (DEUTSCHE GOLD- UND SILBER-SCHEIDEANSTALT VORMALS ROESSLER) 18. Juni 1970 (1970-06-18) * Beispiel 1 * ----- | 1 | C09C C08K C01B |
| A | DE 40 29 158 A1 (DEGUSSA AG, 6000 FRANKFURT, DE) 19. März 1992 (1992-03-19) * Beispiele 3,4 * * Ansprüche * ----- | 1 | |

Der vorliegende Recherchenbericht wurde für alle Patentansprüche erstellt

| Recherchenort | Abschlußdatum der Recherche | Prüfer |
|---|---|---|
| München | 13. April 2006 | Russell, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

4
EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 06 10 0823

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-2006

| Im Recherchenbericht angeführtes Patentdokument | Datum der Veröffentlichung | Mitglied(er) der Patentfamilie | Datum der Veröffentlichung |
|---|---|---|---|
| DE 3741846 A1 | 26-01-1989 | BR 8800742 A | 04-10-1988 |
| | | EP 0280851 A1 | 07-09-1988 |
| | | JP 2025521 C | 26-02-1996 |
| | | JP 7055817 B | 14-06-1995 |
| | | JP 63225518 A | 20-09-1988 |
| | | US 4877595 A | 31-10-1989 |
| DE 10356042 A1 | 07-07-2005 | WO 2005054390 A1 | 16-06-2005 |
| DE 19936478 A1 | 15-02-2001 | CA 2314804 A1 | 03-02-2001 |
| | | EP 1074513 A2 | 07-02-2001 |
| | | JP 2001072427 A | 21-03-2001 |
| | | JP 2004161611 A | 10-06-2004 |
| | | NO 20003914 A | 05-02-2001 |
| | | SG 85204 A1 | 19-12-2001 |
| | | US 2005220692 A1 | 06-10-2005 |
| DE 1129459 B | 17-05-1962 | CH 408649 A | 28-02-1966 |
| | | GB 962824 A | 01-07-1964 |
| | | NL 136774 C | |
| | | NL 269702 A | |
| DE 1807714 B1 | 18-06-1970 | CH 497224 A | 15-10-1970 |
| | | ES 196249 Y | 01-08-1975 |
| | | ES 372366 A1 | 16-03-1972 |
| | | ES 395483 A1 | 01-11-1974 |
| | | FR 2024818 A5 | 04-09-1970 |
| | | GB 1294338 A | 25-10-1972 |
| | | JP 51011344 B | 10-04-1976 |
| | | NL 6915288 A | 12-05-1970 |
| | | US 3860682 A | 14-01-1975 |
| | | US 3738785 A | 12-06-1973 |
| | | US 3742566 A | 03-07-1973 |
| | | US 3762851 A | 02-10-1973 |
| DE 4029158 A1 | 19-03-1992 | CA 2051285 A1 | 15-03-1992 |
| | | EP 0475046 A2 | 18-03-1992 |
| | | JP 6136285 A | 17-05-1994 |
| | | US 5184779 A | 09-02-1993 |
| | | ZA 9107339 A | 24-06-1992 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6455613 B1
- US 5430087 A
- US 5294253 A
- US 4325686 A
- US 4877595 A
- US 3838785 A
- US 3742566 A
- US 3762851 A
- US 3860682 A
- EP 0280851 B1
- DE 1807714 B
- EP 0725037 A1
- EP 075037 A1
- DE 19601415
- WO 9909036 A
- DE 10163945
- DE 10223658
- EP 0280851 A
- EP 0393356 A1


### In der Beschreibung aufgeführte Nicht-Patentliteratur


- **S. WOLFF.** Chemical Aspects of Rubber Reinforcement by Fillers. *Rubber Chem. Technol.,* 1996, vol. 69, 325
- **U. GÖRL ; R. PANENKA.** Silanisierte Kieselsäuren - Eine neue Produktklasse für zeitgemäße Mischungsentwicklung. *Kautsch. Gummi Kunstst.,* 1993, vol. 46, 538
- **H.-D. LUGINSLAND.** Processing of Silica/Silane-Filled Tread Compounds. *paper No. 34 presented at the ACS Meeting,* 04. April 2000
- **W. HOFMANN.** Kautschuktechnologie. Genter Verlag, 1980
- **DR. W. NIEDERMEIER.** New insights into the tear mechanism. *Tire Technology,* 2003
- **H. GEISLER.** *DIK aktuell,* 1997
- **MEDALIA.** *Rubber Age,* April 1965
- **W. HOFMANN.** Rubber Technology Handbook. Hanser Verlag, 1994